(19) Europäisches Patentamt
European Patent Office
Office européen des brevets

(11) **EP 2 979 854 A1**

(12) **EUROPEAN PATENT APPLICATION**
published in accordance with Art. 153(4) EPC

(43) Date of publication:
**03.02.2016 Bulletin 2016/05**

(51) Int Cl.:
**B32B 3/30** *(2006.01)*  **B32B 27/16** *(2006.01)*
**B32B 27/30** *(2006.01)*  **C08F 290/06** *(2006.01)*
**G02B 1/11** *(2015.01)*

(21) Application number: **14775087.1**

(22) Date of filing: **31.03.2014**

(86) International application number:
**PCT/JP2014/059450**

(87) International publication number:
**WO 2014/157718 (02.10.2014 Gazette 2014/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.03.2013 JP 2013073258
28.05.2013 JP 2013111829
24.06.2013 JP 2013131527**

(71) Applicant: **Mitsubishi Rayon Co., Ltd.
Tokyo 100-8253 (JP)**

(72) Inventors:
• **OTANI, Go**
**Otake-shi
Hiroshima 739-0693 (JP)**
• **NAKAI, Yusuke**
**Otake-shi
Hiroshima 739-0693 (JP)**

(74) Representative: **Hoffmann Eitle
Patent- und Rechtsanwälte PartmbB
Arabellastraße 30
81925 München (DE)**

(54) **ARTICLE**

(57)    An article in which at least one surface of a base is provided with a microrelief structure layer that contains a cured product of an active energy ray curable resin composition. The active energy ray curable resin composition contains a polymerizable component (Z1), a photopolymerization initiator (D) and an additive (E). The additive (E) is not polymerizable, and the content of the additive (E) in the microrelief structure layer is 5 mg/m$^2$ or less.

FIG. 1

EP 2 979 854 A1

## Description

TECHNICAL FIELD

The present invention relates to an article.

BACKGROUND ART

It has been known that articles having a fine relief structure having a cycle equal to or less than the wavelength of visible light on the surface exhibit anti-reflection performance due to a continuous change in refractive index of the fine relief structure. Moreover, it has also been known that the fine relief structure exhibits super water repellency due to the Lotus effect.

As a method of manufacturing an article having a fine relief structure on the surface, for example, the following method has been proposed.

(i) A method in which the fine relief structure is transferred to a thermoplastic resin at the time of injection molding or press molding the thermoplastic resin using a stamper having the inverted structure of the fine relief structure on the surface.

(ii) A method in which an active energy ray curable resin composition is filled between a stamper having the inverted structure of a fine relief structure on the surface and a transparent substrate and cured by irradiating with an active energy ray to obtain a cured product having the fine relief structure transferred thereto and the stamper is then released, or a method in which an active energy ray curable resin composition is filled between the stamper and a transparent substrate, the fine relief structure is transferred to this active energy ray curable resin composition, the stamper is released therefrom, and the active energy ray curable resin composition is then cured by irradiating with an active energy ray.

Among these, the method of (ii) described above has received attention from the viewpoint of satisfactory transferability of the fine relief structure, a high degree of freedom in composition of the surface of an article, a possibility of continuous production in a case in which the stamper is a belt or a roll, and excellent productivity. As the active energy ray curable resin composition used in this method, for example, the following compositions have been proposed.

(1) A photocurable resin composition containing an acrylate oligomer such as a urethane acrylate, an acrylic resin having a radical polymerizable functional group, a mold releasing agent, and a photopolymerization initiator (Patent Document 1).

(2) An ultraviolet curable resin composition containing a polyfunctional (meth)acrylate such as trimethylolpropane tri(meth)acrylate, a photopolymerization initiator, and a leveling agent such as polyether-modified silicone oil (Patent Document 2).

(3) A photocurable resin composition containing an (meth) acrylate such as ethoxylated bisphenol A di(meth)acrylate, a reactive diluent such as N-vinyl pyrrolidone, a photopolymerization initiator, and a fluorine-based surfactant (Patent Document 3).

(4) A (meth)acrylic polymerizable composition containing a tri- or higher functional (meth)acrylate compound at 24.8% by mass or more and polyethylene glycol di(meth)acrylate at 37.2% by mass or more (Patent Document 4).

(5) An active energy ray curable resin composed of a tetra-functional or higher polyfunctional (meth)acrylate unit at 10 to 50% by mass, a polyethylene glycol diacrylate unit (average repeating number of 6 to 40) at 30 to 80% by mass, and a monofunctional monomer unit at 0 to 20% by mass (Patent Document 5).

CITATION LIST

PATENT DOCUMENT

Patent Document 1: JP 4156415 B1
Patent Document 2: JP 2000-71290 A
Patent Document 3: JP 2007-84625 A
Patent Document 4: JP 5042386 B1
Patent Document 5: JP 4689718 B1

## SUMMARY OF THE INVENTION

### PROBLEM TO BE SOLVED BY THE INVENTION

However, as the first problem, the compositions of (1) and (2) above have the following problems.

In the case of the photocurable resin composition of (1) above, a great amount of silicone is added thereto as a mold releasing agent, and thus the optical performance of the cured product thereof is changed due to bleeding out of silicone. Specifically, in Examples, the layer consisting of the cured product of the photocurable resin composition is formed so as to be 5 g/m$^2$, silicone as a mold releasing agent is added thereto by 0.5% by mass to have a content of silicone per unit area is 25 mg/m$^2$, and thus it is not possible to sufficiently suppress a change in surface shape in a case in which the silicone is bled out.

The ultraviolet curable resin composition of (2) above has the following problem. Since the amount of silicone oil added is great and the cured layer thereof is thick, a change in reflection spectrum due to bleeding out occurs. Silicone oil is added to the ultraviolet curable resin compositions of Examples by 0.1% by mass with respect to a main agent, and a polymerization inhibitor (hydroquinone monomethyl ether: MEHQ) is added to the acrylate monomer (trade name: M309 manufactured by TOAGOSEI CO., LTD.) used as the main agent by 100 ppm. The cured layer composed of this resin composition has a thickness of about 5 $\mu$m, thus the content of the sum of these per unit area is about 5.5 $\mu$L/m$^2$, and it is difficult to prevent a change in optical performance due to a change in surface shape when bleeding out occurs.

As the second problem, the compositions of (1) to (3) above have the following problems.

In the case of the photocurable resin composition of (1) above, the cured product thereof is easily scratched by rubbing. In addition, since the cured product exhibits insufficient hydrophilicity, dirt does not float in water when dirt such as fingerprints adhering to the cured product (fine relief structure) is wiped off with a damp cloth, and thus it is difficult to wipe them off.

In the case of the ultraviolet curable resin composition of (2) above, dirt such as fingerprints itself hardly adheres to the cured product thereof since the cured product exhibits sufficiently high hydrophobicity, but there is the following problem. The polymerizable component of this composition has a low molecular weight, and thus the cured product is hard and brittle to be easily scratched by rubbing.

The photocurable resin composition of (3) above has the following problem. Since the cured product thereof exhibits insufficient hydrophilicity, dirt does not float in water when dirt such as fingerprints adhering to the cured product (fine relief structure) is wiped off with a damp cloth, and thus it is difficult to wipe them off.

As the third problem, the cured product of the polymerizable composition of (4) above and the cured product of the (5) above have the following problem.

The polyethylene glycol backbone derived from polyethylene glycol di(meth)acrylate relatively easily undergoes oxidative decomposition reaction when being warmed in the presence of air, and thus the fine relief structure cannot be maintained and the optical performance deteriorates in some cases. In particular, the polyethylene glycol backbone easily absorbs moisture due to its hydrophilic nature, and it is concerned that the decomposition is further promoted when the polyethylene glycol backbone is warmed in a moisture absorbed state.

A main object of the invention is to provide an article exhibiting favorable optical performance. Another object of the invention is to provide an article exhibiting high abrasion resistance and favorable dirt wiping-off property. Another object of the invention is to provide an article exhibiting excellent durability.

### MEANS FOR SOLVING PROBLEM

According to an aspect of the invention, there is provided an article equipped with a fine relief structure layer including a cured product of an active energy ray curable resin composition on at least one surface of a substrate, in which the active energy ray curable resin composition contains a polymerizable component (Z1), a photopolymerization initiator (D), and an additive (E), and

the additive (E) is a non-polymerizable and a content of the additive (E) in the fine relief structure layer is 5 mg/m$^2$ or less.

According to another aspect of the invention, there is provided an article equipped with a fine relief structure layer including a cured product of an active energy ray curable resin composition on at least one surface of a substrate, in which

the active energy ray curable resin composition contains a polymerizable component (Z2) containing a (meth)acrylate (A) having a straight or branched chain alkyl or alkenyl group having 6 to 22 carbon atoms, an oxyalkylene group having 2 to 4 carbon atoms, and a (meth)acryloyl group, and a photopolymerization initiator (D).

According to another aspect of the invention, there is provided an article equipped with a fine relief structure layer including a cured product of an active energy ray curable resin composition on at least one surface of a substrate, in which

the active energy ray curable resin composition contains a polymerizable component (Z3) and a photopolymerization initiator (D), and

the polymerizable component (Z3) contains an antioxidant (F) having a polymerizable functional group.

According to another aspect of the invention, there is an antireflective article consisting of any of the articles described above.

EFFECT OF THE INVENTION

According to an embodiment of the invention, it is possible to provide an article exhibiting favorable optical performance. According to another embodiment of the invention, it is possible to provide an article exhibiting high abrasion resistance and favorable dirt wiping-off property. According to another embodiment of the invention, it is possible to provide an article exhibiting excellent durability.

BRIEF DESCRIPTION OF DRAWINGS

Fig. 1 is a cross-sectional view illustrating an example of an article equipped with a fine relief structure layer according to an embodiment of the invention;

Fig. 2 is a cross-sectional view of the flowchart for describing a manufacturing process of a stamper having anodized alumina on the surface; and

Fig. 3 is a block diagram illustrating an example of a manufacturing apparatus usable at the time of manufacturing an article equipped with a fine relief structure layer according to an embodiment of the invention.

MODE(S) FOR CARRYING OUT THE INVENTION

First embodiment

The article according to an embodiment of the invention includes a light transmissive substrate such as a transparent substrate and a fine relief structure layer provided on at least one surface of the substrate. The fine relief structure layer consists of a cured product of an active energy ray curable resin composition. This active energy ray curable resin composition contains a polymerizable component (Z1), a photopolymerization initiator (D), and an additive (E). The content of the additive (E) in the fine relief structure layer is 5 mg/m$^2$ or less and preferably 5 $\mu$L/m$^2$ or less. This content is more preferably 0.2 mg/m$^2$ or more or 0.2 $\mu$L/m$^2$ or more from the viewpoint of sufficiently obtaining an addition effect of the additive (E). The additive (E) is preferably non-polymerizable, and the mass average molecular weight of the additive (E) is preferably in a range of 100 to 2000. A change in reflection spectrum of the minimum value of the reflectance of the surface of the fine relief structure layer in the visible light region before and after the surface is wiped with ethanol is preferably less than 20 nm.

The polymerizable component (Z1) can contain a (meth)acrylate (A) having a straight or branched chain alkyl or alkenyl group having 6 to 22 carbon atoms, an oxyalkylene group having 2 to 4 carbon atoms, and a (meth)acryloyl group. This (meth)acrylate (A) will be described in the second embodiment to be described later. In addition, the polymerizable component (Z1) can contain an antioxidant (F) having a polymerizable functional group. This antioxidant (F) will be described in the third embodiment to be described later.

The thickness of the fine relief structure layer is preferably 0.5 to 50 $\mu$m. This thickness is preferably 0.5 $\mu$m or more and more preferably 1 $\mu$m or more from the viewpoint of forming the desired fine relief structure on the surface. This thickness is preferably 50 $\mu$m or less, preferably 20 $\mu$m or less, more preferably 13 $\mu$m or less, and even more preferably 10 $\mu$m or less from the viewpoint of suppressing bleeding out. In addition, the average interval between adjacent convex portions of the fine relief structure layer is preferably equal to or less than the wavelength of visible light.

The additive (E) is preferably a non-polymerizable compound that is not copolymerized with the polymerizable component (Z1). In addition, the additive (E) is preferably a non-volatile compound. In addition, the additive (E) preferably includes at least one of a polymerization inhibitor and a mold releasing agent.

The mass average molecular weight of the additive (E) is preferably 100 or more from the viewpoint of suppressing the volatilization from the article. Such additive (E) is distinguished from a common solvent having a molecular weight of less than 100. The mass average molecular weight of the additive (E) is preferably 2000 or less from the viewpoint of compatibility with a component constituting the composition or a raw material component. Such additive (E) is distinguished from a common binder polymer having a mass average molecular weight of more than 2000.

The article according to an embodiment of the invention can be suitably used as an antireflective article.

In the present specification, the (meth)acryloyl group means an acryloyl group and/or a methacryloyl group. In addition, the (meth)acrylate means an acrylate and/or a methacrylate. In addition, the active energy ray means visible light, ultraviolet light, electron beams, plasma, heat rays (infrared rays), and the like. The same also applies to the second and third embodiments to be described later.

In the method of obtaining a cured product having an arbitrary shape formed thereon by transferring the surface shape of a stamper to an active energy ray curable resin composition, it is a common method to add a mold releasing agent to the resin composition in order to easily peel off the cured product from the stamper. However, in a case in which the shape to be transferred is a fine relief structure, there is a case in which, the fine relief structure transferred is buried under the substance bled out or the fine relief structure is changed by bleeding out of the mold releasing agent from the cured product. In particular, in a case in which the average interval between adjacent convex portions of the fine relief structure is equal to or less than the wavelength of visible light and the fine relief structure exhibits antireflection performance, a problem may occur that the antireflection performance is lost or the reflection spectrum changes even though the fine relief structure is only slightly changed due to bleeding out.

Accordingly, as a result of intensive investigations, the present inventors have found out that, in the article having a fine relief structure layer consisting of a cured product of an active energy ray curable resin composition on the surface, a change in optical performance due to bleeding out is suppressed by keeping the amount of the additive (E) contained per unit area of the fine relief structure layer to 5 mg/m$^2$ or less or 5 $\mu$L/m$^2$ or less and thus have completed the first embodiment of the invention.

In the invention, it is preferable to decrease the amount of the additive (E) added to the active energy ray curable resin composition and to further control the thickness of the fine relief structure layer consisting of the cured product of the active energy ray curable resin composition in order to suppress a change in optical performance due to bleeding out. When the amount of the additive (E) added is decreased, it is possible to lower the absolute amount of the compound that possibly bleeds out from the fine relief structure layer and thus to effectively suppress the deterioration in optical performance due to bleeding out. However, there is a possibility that desired performance of the additive (E) is not obtained when the amount of the additive (E) added is too small. Furthermore, there is a case in which the amount of the compound to bleed out increases and the optical performance cannot be maintained when the fine relief structure layer is thick even in a case in which the amount of the additive (E) added is small. Consequently, it has been found that it is important to control both of the amount of the additive (E) added and the thickness of the fine relief structure layer at the same time and thus to keep the amount of the additive (E) contained per unit area within a predetermined range.

In other words, it is important to keep the amount of the additive (E) contained per unit area to be small in the case of forming a fine relief structure layer unlike the case of generally forming a hard coat layer by curing an active energy curable resin composition. It is required to keep the amount of the additive (E) contained per unit area to be smaller since the optical performance is significantly affected even by a slight amount of the substance bled out particularly in a case in which the fine relief structure has a nano-order cycle. Furthermore, it has been found that the deterioration in optical performance due to bleeding out is more remarkable in a case in which the fine relief structure having a nano-order cycle is a structure in which fine projections having a nano-order cycle are spread all over without a gap as to be called a moth-eye structure. Hence, it is required to keep the amount of the additive (E) contained per unit area to be smaller.

In addition, this tendency is more remarkable as the cured product of an active energy ray curable resin composition to form the fine relief structure layer is softer. It is considered that this is because the additive more easily moves in the cured product and bleeds out therefrom as the cured product of an active energy ray curable resin composition is softer. However, it is important to keep the amount of the additive (E) contained per unit area to be small since it is possible to prevent the destruction of fine relief structure and to enhance the abrasion resistance when the cured product of an active energy ray curable resin composition is soft.

In addition, it is preferable to use a polymerizable component having a polyoxyalkylene structure such as polyethylene oxide or polypropylene oxide in order to soften the cured product of an active energy ray curable resin composition.

Second embodiment

The article according to the present embodiment includes a substrate and a fine relief structure layer provided on at least one surface of the substrate. The fine relief structure layer consists of a cured product of an active energy ray curable resin composition. This active energy ray curable resin composition contains a polymerizable component (Z2) containing a (meth)acrylate (A) having a straight or branched chain alkyl or alkenyl group having 6 to 22 carbon atoms, an oxyalkylene group having 2 to 4 carbon atoms, and a (meth)acryloyl group, and a photopolymerization initiator (D).

The (meth)acrylate (A) preferably has a structure in which the alkyl group or alkenyl group and the oxyalkylene group are bonded to each other.

The content of the (meth)acrylate (A) in the polymerizable component (Z2) can be set in a range of 0.1 to 10% by mass.

The cured product of the active energy ray curable resin composition preferably has an indentation modulus in a range of 50 to 4000 MPa.

In the fine relief structure layer, a contact angle of water on the surface thereof is preferably 25° or less.

The polymerizable component (Z2) preferably further contains a (meth)acrylate (B) having an oxyethylene group and two or more (meth)acryloyl groups.

In the fine relief structure layer, an average interval between adjacent convex portions is preferably equal to or less than the wavelength of visible light.

The article according to the present embodiment can be suitably used as an antireflective article.

The present inventors have found out that it is effective to use a monomer having an oxyalkylene group such as oxyethylene group ($-CH_2CH_2O-$) in the molecule as the polymerizable component of the active energy ray curable resin composition in order to improve the abrasion resistance of the fine relief structure. Examples of such monomer may include polyethylene glycol di(meth)acrylate or ethylene oxide-modified polyfunctional (meth)acrylate.

The use of such monomer makes it possible to impart hydrophilicity to the surface of the fine relief structure and thus to facilitate the removal of dirt such as fingerprints by wiping with a damp cloth as well as to impart flexibility to the fine relief structure and thus to prevent breakage or tearing of the projections so that the fine relief structure can exhibit favorable abrasion resistance.

Furthermore, the present inventors have succeeded in obtaining a fine relief structure exhibiting further improved abrasion resistance while exhibiting sufficient dirt removal performance by wiping with a damp cloth using a (meth)acrylate (A) having a straight or branched chain alkyl or alkenyl group having 6 to 22 carbon atoms, an oxyalkylene group having 2 to 4 carbon atoms, and a (meth)acryloyl group, thereby completing the second embodiment of the invention.

In addition, this (meth)acrylate (A) has an effect of improving the mold releasing property of the fine relief structure from the stamper when the fine relief structure is formed by transfer using a stamper. In other words, the (meth)acrylate (A) also has an effect as a reactive mold releasing agent. This effect makes it possible to configure the active energy ray curable resin composition only by the polymerizable component (Z2) and the photopolymerization initiator (D) without separately adding an additive to impart mold releasing property. This makes it possible to prevent a change in surface shape of the fine relief structure consisting of the cured product of the active energy ray curable resin composition by the additive component bled out from the cured product. The additive to impart mold releasing property can be added as long as the added amount is in the range in which the surface shape of the fine relief structure is not changed by the bleeding out of the additive.

Third embodiment

The article according to the present embodiment includes a light transmissive substrate such as a transparent substrate and a fine relief structure layer provided on at least one surface of the substrate. This fine relief structure layer consists of a cured product of an active energy ray curable resin composition. This active energy ray curable resin composition contains a polymerizable component (Z3) and a photopolymerization initiator (D), and contains an antioxidant (F) having a polymerizable functional group as the polymerizable component (Z3).

This antioxidant (F) preferably has a (meth)acryloyl group as the polymerizable functional group. In addition, this antioxidant (F) preferably has a radical scavenging ability. In addition, this antioxidant (F) preferably includes at least one of a phenolic antioxidant and a hindered amine-based antioxidant. The antioxidant (F) is a compound having a (meth)acryloyl group in the same molecule, and the compound is preferably a hindered amine compound or a compound having a hydroxyl group in an aromatic ring as a substituent.

The polymerizable component (Z3) preferably further contains a (meth)acrylate having a polyoxyalkylene structure. This polyoxyalkylene structure preferably includes at least one kind selected from a polyoxyethylene structure: $-(CH_2CH_2O)_n-$, a polyoxypropylene structure: a chain structure consisting of a repeating unit represented by $-(CH_2CHCH_3O)-$ and/or a repeating unit represented by $-(CHCH_3CH_2O)-$, a polyoxytrimethylene structure: $-(CH_2CH_2CH_2O)_n-$, a polyoxybutylene structure: a chain structure consisting of a repeating unit represented by $-(CH_2CHC_2H_5O)-$ and/or a repeating unit represented by $-(CHC_2H_5CH_2O)-$, a polyoxytetramethylene structure: $-(CH_2CH_2CH_2CH_2O)_n-$, or a polyoxypentamethylene structure: $-(CH_2CH_2CH_2CH_2CH_2O)_n-$ (n in Formulas above represents the number of repetitions).

The average interval between adjacent convex portions of the fine relief structure layer is preferably equal to or less than the wavelength of visible light.

In the active energy ray curable resin composition, the content of the non-polymerizable additive (E) that is not copolymerized with the polymerizable component (Z3) is preferably 0 mg/m$^2$ or more and 5 mg/m$^2$ or less or 0 $\mu$L/m$^2$ or more and 5 $\mu$L/m$^2$ or less.

The article according to the present embodiment can be suitably used as an antireflective article.

The present inventors have found out that a fine relief structure exhibiting excellent abrasion resistance is obtained by the use of a monomer having a great number of an oxyethylene group ($-CH_2CH_2O-$) in the molecule, and it has been found that it is preferable to use, for example, polyethylene glycol having an average molecular weight of about 300 to 1000 (number of moles of ethylene oxide is about 7 to 23) in the molecule as polyethylene glycol di(meth)acrylate from the viewpoint of abrasion resistance.

In addition, it has been found that the fine relief surface becomes hydrophilic by containing a great number of oxyethylene groups and thus it is possible to impart the performance that dirt such as fingerprints can be easily removed by wiping with a damp cloth.

However, it has been found that the polyethylene glycol chain which is a structure having oxyethylene groups linked in a row has a problem in heat resistance due to its nature to easily undergo an oxidative decomposition reaction and also exhibits low heat resistance particularly in a moisture absorbed state due to its moisture absorbing property.

From the background as described above, investigations have been carried out to improve the durability of the cured product of an active energy ray curable raw resin composition containing polyethylene glycol di(meth)acrylate by adding various antioxidants thereto. However, it has been found that the antioxidant that is excellent in compatibility with the active energy ray curable resin composition is limited to those which have a relatively low molecular weight and the use of such antioxidant allows the shape of the fine relief structure to deteriorate by bleeding out of the antioxidant or the surface to be hydrophobic.

The present inventors have further carried out intensive investigation, and as a result, they found out that it is possible to maintain the fine relief structure in a variety of endurance tests by the use of an antioxidant having a functional group that is copolymerized with a polymerizable component of an active energy ray curable resin composition, thereby completing the third embodiment of the invention.

The following effects are obtained by the use of an antioxidant having a functional group that is copolymerized with a polymerizable component of an active energy ray curable resin composition. First, it is possible to prevent the antioxidant from bleeding out as the antioxidant forms a chemical bond in the cured product of the active energy ray curable resin composition so as to be immobilized. Next, the antioxidant has a functional group that is copolymerized with a polymerizable component of the active energy ray curable resin composition and thus exhibits excellent compatibility in an uncured resin composition state.

In addition, it has been originally concerned that the antioxidant is immobilized by a chemical bond in the cured product so that the movement thereof in the cured product is limited and the ability thereof to detoxify the active radical generated in the decomposition process of the cured product significantly decreases. However, it has been found that the durability of the cured product is significantly improved by the use of an antioxidant having a functional group that is copolymerized with a polymerizable component of the active energy ray curable resin composition. In addition, it has also been found out that the abrasion resistance or the antifouling performance due to hydrophilicity of the relief surface of the fine relief structure layer is hardly affected by the antioxidant.

It can be considered that this result indicates that the polyalkylene glycol chain maintains a certain degree of mobility even in the cured product of a three-dimensional crosslinked body and the carboxyl radical (COO·) produced by the decomposition has high possibility to meet the antioxidant immobilized in the cured product and is detoxified.

In addition, it is effective to use an antioxidant having a polymerizable functional group from the viewpoint of the weather resistance. It is general to use an ultraviolet absorber in the related art in the case of improving the weather resistance of the cured product of an active energy ray curable resin composition. The ultraviolet absorber can prevent ultraviolet light from reaching the depth of the cured product and thus improve the weather resistance. However, in a case in which the fine relief structure is formed on the surface of the cured product of an active energy ray curable resin composition, the fine relief structure surface that is the outermost surface is directly exposed to ultraviolet light that is not attenuated and thus inevitably damaged. Hence, it is required to stop the decomposition reaction of the cured product of an active energy ray curable resin composition in order to protect the fine relief structure from ultraviolet light, and an antioxidant having a radical scavenging ability is effectively used, in particular.

In the embodiments (first, second, and third embodiments) described above, it is preferable that the polymerizable components (Z1, Z2, and Z3) contain an oxyethylene group 30 to 70% by mass with respect to the entire polymerizable component. It is possible to adjust the softness of the cured product by changing the content of the oxyethylene group. The cured product tends to be flexible as the content of the oxyethylene group increases, and it is possible to prevent breakage or destruction of the projections (convex portions) of the fine relief structure. On the other hand, it is easier to suppress the phenomenon that the projections of the fine relief structure coalesce into one as the content of the oxyethylene group is lower. It is preferable to optimally set the extent of the hardness of the cured product in accordance with the aspect ratio (height of convex portion/average interval between convex portions) of the relief structure. For example, in a case in which this aspect ratio is about 1.5 to 2.5, the content of the oxyethylene group is preferably in a range of about 30 to 50%, and in a case in which the aspect ratio is about 0.5 to 1.5, the content of the oxyethylene group is preferably in a range of 50 to 70%.

Hereinafter, preferred embodiments of the invention will be further described.

First embodiment

(Active energy ray curable resin composition)

The active energy ray curable resin composition in an embodiment of the invention is a resin composition that undergoes the polymerization reaction by irradiating with an active energy ray to be cured. This active energy ray curable resin composition contains a polymerizable component (Z1), a photopolymerization initiator (D), and an additive (E).

(Polymerizable component (Z1))

Examples of the polymerizable component (Z1) may include a monomer, an oligomer, and a reactive polymer which have a radically polymerizable bond and/or a cationically polymerizable bond in the molecule. The content ratio of the polymerizable component (Z1) in the active energy ray curable resin composition is preferably 80% by mass or more, more preferably 90% by mass or more, and even more preferably 95% by mass or more from the viewpoint of obtaining the desired resin cured layer (fine relief structure layer).

Examples of the monomer having a radically polymerizable bond may include a monofunctional monomer, a bifunctional monomer, and a trifunctional or higher polyfunctional monomer.

Examples of the monofunctional monomer may include a (meth)acrylate derivative such as methyl (meth)acrylate, ethyl (meth)acrylate, propyl (meth)acrylate, n-butyl (meth)acrylate, i-butyl (meth)acrylate, s-butyl (meth)acrylate, t-butyl (meth)acrylate, 2-ethylhexyl (meth)acrylate, lauryl (meth)acrylate, alkyl (meth)acrylate, tridecyl (meth)acrylate, (iso)stearyl (meth)acrylate, cyclohexyl (meth)acrylate, benzyl (meth)acrylate, phenoxyethyl (meth)acrylate, isobornyl (meth)acrylate, glycidyl (meth)acrylate, tetrahydrofurfuryl (meth)acrylate, allyl (meth)acrylate, 2-hydroxyethyl (meth)acrylate, hydroxypropyl (meth)acrylate, 2-methoxyethyl (meth)acrylate, 2-ethoxyethyl (meth)acrylate, 2-ethylhexylcarbitol (meth)acrylate, ethoxylated o-phenylphenol (meth)acrylate, methoxypolyethylene glycol (meth)acrylate, phenoxypolyethylene glycol (meth)acrylate, 2-(meth)acryloyloxyethyl succinate, alkoxy polyethylene glycol mono(meth)acrylate, polydimethylsiloxane alkylene oxide-modified mono(meth)acrylate, 1,2,2,6,6-pentamethyl-4-piperidyl (meth)acrylate, 2,2,6,6-tetramethyl-4-piperidyl (meth)acrylate, 2-tert-butyl-6-(3-tert-butyl-2-hydroxy-5-methylbenzyl)-4-methylphenyl acrylate, or 2-[1-(2-hydroxy-3,5-di-tert-pentylphenyl)ethyl]-4,6-di-tert-pentylphenyl acrylate; (meth)acrylic acid; (meth)acrylonitrile; a styrene derivative such as styrene or α-methylstyrene; and a (meth)acrylamide derivative such as (meth)acrylamide, N-dimethyl(meth)acrylamide, N-diethyl(meth)acrylamide, or dimethylaminopropyl (meth)acrylamide. These may be used singly or two or more kinds thereof may be used concurrently.

Examples of the bifunctional monomer may include a bifunctional monomer such as ethylene glycol di(meth)acrylate, diethylene glycol di(meth)acrylate, triethylene glycol di(meth)acrylate, polyethylene glycol #200 di(meth)acrylate, polyethylene glycol #300 di(meth)acrylate, polyethylene glycol #400 di(meth)acrylate, polyethylene glycol #600 di(meth)acrylate, polyethylene glycol # 1000 di(meth)acrylate, dipropylene glycol di(meth)acrylate, tripropylene glycol di(meth)acrylate, polypropylene glycol #400 di(meth)acrylate, polypropylene glycol #700 di(meth)acrylate, polytetramethylene glycol #650 di(meth)acrylate, 2-hydroxy-3-acryloyloxypropyl methacrylate, alkoxylated bisphenol A di(meth)acrylate, 9,9-bis[4-(2-acryloyloxyethoxy)phenyl]fluorene, tricyclodecanedimethanol di(meth)acrylate, 1,5-pentanediol di(meth)acrylate, 1,3-butylene glycol di(meth)acrylate, 1,6-hexanediol di(meth)acrylate, 1,9-nonanediol di(meth)acrylate, 1,10-decanediol di(meth)acrylate, neopentyl glycol di(meth)acrylate, isocyanuric acid ethylene oxide-modified di(meth)acrylate, hydroxypivalic acid neopentyl glycol di(meth)acrylate, a bifunctional urethane (meth)acrylate, a bifunctional epoxy (meth)acrylate, a bifunctional polyester (meth)acrylate, a bifunctional silicone acrylate, divinylbenzene, or methylenebisacrylamide. These may be used singly or two or more kinds thereof may be used concurrently.

Examples of the trifunctional or higher polyfunctional monomer may include a trifunctional monomer such as pentaerythritol tri-tetra (meth)acrylate, trimethylolpropane tri(meth)acrylate, trimethylolpropane ethylene oxide-modified tri(meth)acrylate, trimethylolpropane propylene oxide-modified triacrylate, or isocyanuric acid ethylene oxide-modified tri(meth)acrylate; a condensation reaction mixture of succinic acid/trimethylolethane/acrylic acid, dipentaerythritol pentahexa(meth)acrylate, ditrimethylolpropane tetraacrylate, polypentaerythritol poly(meth)acrylate, a tri- or higher functional urethane (meth)acrylate, a tri- or higher functional epoxy (meth) acrylate, a tri- or higher functional polyester (meth)acrylate, and a tri- or higher functional silicone acrylate. These may be used singly or two or more kinds thereof may be used concurrently.

Examples of the monomer having a cationically polymerizable bond may include a monomer having an epoxy group, an oxetanyl group, an oxazolyl group, a vinyloxy group, or the like, and a monomer having an epoxy group is particularly preferable.

Examples of the oligomer or the reactive polymer may include an unsaturated polyester such as a condensate of an unsaturated dicarboxylic acid with a polyhydric alcohol; a (meth)acrylate such as polyester (meth)acrylate, polyether (meth)acrylate, polyol (meth)acrylate, epoxy (meth)acrylate, or urethane (meth)acrylate; a cationically polymerizable epoxy compound; and any homopolymer or copolymer of the above-mentioned monomers having a radically polymerizable bond in the side chain.

(Photopolymerization initiator (D))

The photopolymerization initiator (D) in the first embodiment and the second and third embodiments to be described later is a compound which is cleaved by irradiating with an active energy ray and generates a radical to initiate the polymerization reaction. The active energy ray is preferably ultraviolet light from the viewpoint of apparatus cost or productivity.

Examples of the photopolymerization initiator (D) which generates a radical by ultraviolet light may include benzophenone, 4,4-bis(diethylamino)benzophenone, 2,4,6-trimethyl benzophenone, methyl o-benzoylbenzoate, 4-phenylbenzophenone, t-butylanthraquinone, 2-ethylanthraquinone, a thioxanthone (2,4-diethylthioxanthone, isopropylthioxanthone, 2,4-dichlorothioxanthone, or the like), an acetophenone (diethoxyacetophenone, 2-hydroxy-2-methyl-1-phenylpropan-1-one, benzyldimethylketal, 1-hydroxycyclohexyl-phenyl ketone, 2-methyl-2-morpholino(4-thiomethylphenyl)propan-1-one, 2-benzyl-2-dimethylamino-1- (4-morpholinophenyl)-butanone, or the like), a benzoin ether (benzoin methyl ether, benzoin ethyl ether, benzoin isopropyl ether, benzoin isobutyl ether, or the like), an acylphosphine oxide (2,4,6-trimethylbenzoyldiphenylphosphine oxide, bis(2,6-dimethoxybenzoyl)-2,4,4-trimethylpentylphosphine oxide, bis(2,4,6-trimethylbenzoyl)-phenylphosphine oxide, or the like), methylbenzoyl formate, 1,7-bis(acridinyl)heptane, and 9-phenylacridine.

The photopolymerization initiator (D) may be used singly or two or more kinds thereof may be used concurrently. In the case of concurrent use, it is preferable to concurrently use two or more kinds which have different absorption wavelengths. In addition, a persulfate salt (potassium persulfate, ammonium persulfate, or the like), a peroxide (benzoyl peroxide, or the like), and a thermal polymerization initiator such as an azo-based initiator may be concurrently used if necessary.

The content of the photopolymerization initiator (D) is preferably 0.01 to 10 parts by mass, more preferably 0.1 to 5 parts by mass, and even more preferably 0.2 to 3 parts by mass with respect to 100 parts by mass of the polymerizable component (Z1, Z2, or Z3). There is a case in which curing of the active energy ray curable resin composition is not completed and thus the mechanical properties of the article having the fine relief structure on the surface may be impaired when the content of the photopolymerization initiator (D) is too low. There is a case in which the unreacted photopolymerization initiator (D) remains in the cured product and acts as a plasticizer and thus the elastic modulus of the cured product decreases and the abrasion resistance thereof is impaired when the content of the photopolymerization initiator (D) is too high. In addition, it is a cause of coloring in some cases.

(Additive (E))

The fine relief structure layer of the article according to an embodiment of the invention contains the additive (E) at 5 mg/m$^2$ or less or 5 $\mu$L/m$^2$ or less. For this purpose, it is preferable that an active energy ray curable resin composition constituting the fine relief structure layer contain the additive (E) at 5 mg/m$^2$ or less or 5 $\mu$L/m$^2$ or less. The additive (E) is preferably a non-polymerizable compound which does not have a polymerizable functional group and is not copolymerized with the polymerizable component (Z1), and this non-polymerizable compound is preferably a non-volatile compound. In addition, it is preferable that the additive (E) not contain a volatile component such as a solvent which readily volatilizes and disappears.

Examples of the additive (E) may include known additives such as a polymerization inhibitor, a surfactant, a mole releasing agent, a leveling agent, a lubricant, a plasticizer, an antistatic agent, a light stabilizer, a radical scavenger, an antioxidant, a flame retardant, a flame retardant auxiliary, a filler, an ultraviolet absorber, a silane coupling agent, a coloring agent, a reinforcing agent, an inorganic filler, an impact modifier, a defoaming agent, a fluorescent agent, and a luminescent agent. Among these, at least one kind selected from an antioxidant, a polymerization inhibitor, an ultraviolet absorber, a light stabilizer, a defoaming agent, a mold releasing agent, a lubricant, a leveling agent, a surfactant, a coloring agent, a fluorescent agent, a luminescent agent, or an antistatic agent is preferable.

Among these, the polymerization inhibitor and the mold releasing agent are preferable from the viewpoint of being components which are highly required to be added to the active energy ray curable resin composition. As the polymerization inhibitor, at least one of a hydroquinone-based polymerization inhibitor and a phenolic polymerization inhibitor is preferable.

Examples of the polymerization inhibitor may include hydroquinone (HQ) and hydroquinone monomethyl ether (MEHQ) as a hydroquinone-based polymerization inhibitor, and 2,2'-methylene-bis(4-methyl-6-tert-butylphenol), catechol, picric acid, tert-butyl catechol, 2,6-di-tert-butyl-p-cresol (BHT), and 4,4'-thiobis[ethylene(oxy)(carbonyl)(ethylene)]bis[2,6-bis(1,1-dimethylethyl)phenol] as a phenolic polymerization inhibitor. Examples of the phenothiazine-based polymerization inhibitor may include phenothiazine, bis($\alpha$-methylbenzyl)phenothiazine, 3,7-dioctylphenothiazine, and bis($\alpha,\alpha$-dimethylbenzyl)phenothiazine. Among the polymerization inhibitors mentioned herein, a phenolic polymerization inhibitor such as BHT can also be used as an antioxidant.

Examples of the mold releasing agent may include a (poly)oxyalkylene alkyl phosphate compound, a fluorine-containing compound, a silicone-based compound, a compound having a long chain alkyl group, polyalkylene wax, amide wax, and Teflon powder (Teflon is a registered trademark). These may be used singly or two or more kinds thereof may be used concurrently. Among these, those which contain a (poly)oxyalkylene alkyl phosphate compound as a main component are preferable.

The (poly)oxyalkylene alkyl phosphate compound is preferably a compound represented by the following Formula (1) from the viewpoint of mold releasing property:

$$(HO)_{3-n}(O{=})P[-O-(R^2O)_m-R^1]_n \qquad (1)$$

($R^1$ is an alkyl group, $R^2$ is an alkylene group, m is an integer of 1 to 20, and n is an integer of 1 to 3.)

In Formula (1), $R^1$ is preferably an alkyl group having 1 to 20 carbon atoms and more preferably an alkyl group having 3 to 18 carbon atoms. $R^2$ is preferably an alkylene group having 1 to 4 carbon atoms and more preferably an alkylene group having 2 to 3 carbon atoms. m is preferably an integer of 1 to 10. The (poly)oxyalkylene alkyl phosphate compound represented by Formula (1) may be any of a monoester (n = 1), a diester (n = 2), or a triester (n = 3). In addition, a plurality of the (poly)oxyalkylene alkyl groups in one molecule may be different from one another in the case of a diester or a triester.

Examples of the commercially available product of the (poly)oxyalkylene alkyl phosphate compound may include the following products. Trade name: JP-506H manufactured by JOHOKU CHEMICAL CO., LTD., trade name: MOLD WIZ INT-1856 manufactured by Axel Plastics Research Laboratories, Inc., and trade name: TDP-10, TDP-8, TDP-6, TDP-2, DDP-10, DDP-8, DDP-6, DDP-4, DDP-2, TLP-4, TCP-5, and DLP-10 manufactured by Nikko Chemicals Co., Ltd. These (poly)oxyalkylene alkyl phosphate compounds may be used singly or two or more kinds thereof may be used concurrently. The mold releasing agents mentioned here also exert a function as a surfactant, a leveling agent, or a lubricant in some cases.

Examples of the light stabilizer may include a hindered amine-based antioxidant. Examples of the primary antioxidant that is a hindered amine-based radical scavenger may include those which are presented below. Trade name: Chimassorb 2020FDL, Chimassorb 944FDL, Tinuvin 622SF, Uvinul 5050H, Tinuvin 144, Tinuvin 765, Tinuvin 770DF, and Tinuvin 4050FF manufactured by BASF.

Examples of the ultraviolet absorber may include ultraviolet absorbers which are benzophenone-based, benzotriazole-based, benzoate-based, and triazine-based. Examples of the commercially available product thereof may include trade name: Tinuvin 400 and Tinuvin 479 manufactured by Ciba Specialty Chemicals Inc. and trade name: Viosorb 110 manufactured by KYODO CHEMICAL CO., LTD.

Examples of the antioxidant may include antioxidants which are hindered phenol-based, benzimidazole-based, phosphorus-based, and sulfur-based in addition to those which are mentioned above. Examples of the commercially available product thereof may include trade name: "IRGANOX" series manufactured by Ciba Specialty Chemicals Inc.

The amount of the additive (E) added can be defined by the content thereof per unit area of the fine relief structure layer containing the cured product of the active energy ray curable resin composition. It is possible to suppress a change in optical performance of the article due to bleeding out of the additive (E) by controlling this content. It is important to decrease the amount of the additive bled out particularly in a case in which the average interval between adjacent convex portions of the fine relief structure is equal to or less than the wavelength of visible light. The content of the additive (E) is 5 mg/m$^2$ or less or 5 $\mu$L/m$^2$ or less in the fine relief structure layer. It is not possible to sufficiently prevent a change in optical performance due to bleeding out of the additive (E) in a case in which the additive (E) is contained in an amount exceeding this range. This content is preferably 0.2 mg/m$^2$ or more or 0.2 $\mu$L/m$^2$ or more from the viewpoint of sufficiently obtaining an addition effect of the additive (E).

The additive (E) preferably includes at least one of the polymerization inhibitor and the mold releasing agent. As this polymerization inhibitor, it is preferable to contain at least one kind selected from the hydroquinone-based polymerization inhibitor described above, the phenolic polymerization inhibitor described above, or the phenothiazine-based polymerization inhibitor described above, and it is particularly preferable to contain the hydroquinone-based polymerization inhibitor. As the mold releasing agent, it is preferable to contain at least one kind of the mold releasing agents described above, and it is particularly preferable to contain the (poly)oxyalkylene alkyl phosphate compound. The total amount of the polymerization inhibitor and the mold releasing agent is preferably 5 mg/m$^2$ or less or 5 $\mu$L/m$^2$ or less and preferably 0.2 mg/m$^2$ or more or 0.2 $\mu$L/m$^2$ or more in the fine relief structure layer.

(Other components)

The active energy ray curable resin composition according to the present embodiment may contain an oligomer or a polymer which does not have a radical polymerizable functional group, an organic solvent in a trace amount, and the like if necessary in the range in which the effect of the invention is not impaired.

In the active energy ray curable resin composition according to the first embodiment described above, the content of the additive (E) is within a specific range, and thus it is possible to suppress a change in optical performance of the article due to bleeding out of the additive (E).

Second embodiment

(Active energy ray curable resin composition)

The active energy ray curable resin composition used in the present embodiment is a composition which can be cured as the polymerization reaction of the monomer (polymerizable component) contained in this composition proceeds by irradiating with an active energy ray, and contains a polymerizable component (Z2) and a photopolymerization initiator (D) as essential components.

The hardness of the cured product of the active energy ray curable resin composition is not particularly limited, but it is preferable that the indentation modulus thereof be in a range of 50 to 4000 MPa. The indentation modulus is preferably 4000 MPa or less, more preferably 1000 MPa or less, and even more preferably 500 MPa or less from the viewpoint of abrasion resistance (to suppress the phenomenon that the projections of the fine relief structure are broken or torn). In addition, the indentation modulus is preferably 50 MPa or more, more preferably 100 MPa or more, and even more preferably 120 MPa or more from the viewpoint of maintaining the shape of the projections of the fine relief structure in a self-supporting state and thus maintaining excellent antireflection performance.

The contact angle of water on the fine relief structure surface consisting of the cured product of the active energy ray curable resin composition is not particularly limited, but it is preferable that the contact angle be small from the viewpoint of the ease of removal of dirt by wiping with a damp cloth and the contact angle is more preferably 25° or less. The hydrophilicity of the fine relief structure surface is higher as contact angle of water is smaller, and thus it is easy to remove dirt by wiping with a damp cloth when dirt such as fingerprints adheres.

(Polymerizable component (Z2))

The polymerizable component (Z2) contains the (meth)acrylate (A) described above as an essential component and can contain another (meth)acrylate (B), and another polymerizable component (C) (excluding (meth)acrylate (A) and (meth)acrylate (B)) if necessary.

((Meth)acrylate (A))

The (meth)acrylate (A) is a compound having a straight or branched chain alkyl or alkenyl group having 6 to 22 carbon atoms, an oxyalkylene group having 2 to 4 carbon atoms, and a (meth)acryloyl group. It is possible to contain two or more (meth)acryloyl groups in one molecule. It is preferable to contain one (meth)acryloyl group in one molecule from the viewpoint of ease of synthesis of the (meth)acrylate (A).

It is possible to lower the free energy of the fine relief structure surface, to impart slip property thereto, and thus to improve the abrasion resistance as the (meth)acrylate (A) has a straight or branched chain alkyl or alkenyl group having 6 to 22 carbon atoms in the molecule.

Examples of the straight or branched chain alkyl group having 6 to 22 carbon atoms may include a n-hexyl group, an isohexyl group, a n-heptyl group, an isoheptyl group, a n-octyl group, a 2-ethylhexyl group, a n-nonyl group, an isononyl group, a n-decyl group, an isodecyl group, a n-undecyl group, an isoundecyl group, a n-dodecyl group, an isododecyl group, a n-tridecyl group, an isotridecyl group, a n-tetradecyl group, an isotetradecyl group, a n-pentadecyl, a n-hexadecyl group, a 2-ethyltetradecyl group, a n-heptadecyl group, a n-octadecyl group, a 2-ethylhexadecyl group, a n-nonadecyl group, a n-eicosyl group, and a n-docosyl group.

Examples of the straight or branched chain alkenyl group having 6 to 22 carbon atoms may include a n-hexenyl group, an isohexenyl group, a n-heptenyl group, an isoheptenyl group, a n-octenyl group, an isooctenyl group, a n-nonenyl group, an isononenyl group, a n-decenyl group, an isodecenyl group, a n-undecenyl group, an isoundecenyl group, a n-dodecenyl group, an isododecenyl group, a n-tridecenyl group, an isotridecenyl group, a n-tetradecenyl group, an iso-tetradecenyl group, a n-pentadecenyl group, an iso-pentadecenyl group, a n-hexadecenyl group, an iso-hexadecenyl group, a n-heptadecenyl group, a n-oleyl group, an isooleyl group, a n-nonadecenyl group, an isononadecenyl group, a n-eicosenyl group, an isoeicosenyl group, a n-heneicosenyl group, an isoheneicosenyl group, and n-docosenyl group.

The straight or branched chain alkyl or alkenyl group having 6 to 22 carbon atoms is preferably those which have high slip property and constitute the (meth)acrylate (A) that is liquid at room temperature (about 25°C). In order to impart slip property, it is preferable that the straight or branched chain alkyl or alkenyl group having 6 to 22 carbon atoms have a great number of carbon atoms. However, in order to obtain the (meth)acrylate (A) that is liquid at room temperature, it is preferable that the crystallinity of the straight or branched chain alkyl or alkenyl group having 6 to 22 carbon atoms be low, and thus it is preferable that the number of carbon atoms of the chain be smaller. For example, a straight or branched chain alkyl or alkenyl group having 6 to 18 carbon atoms, a straight or branched chain alkyl or alkenyl group having 6 to 16 carbon atoms, and a straight or branched chain alkyl or alkenyl group having 6 to 14 carbon atoms are mentioned. It is possible to decrease the crystallinity of the alkyl group or alkenyl group by forming an unsaturated bond in the middle of the chain even in a case in which the chain has a great number of carbon atoms.

The (meth)acrylate (A) has an oxyalkylene group having 2 to 4 carbon atoms in the molecule and thus is likely to be compatible with the active energy ray curable resin composition. In addition, the fine relief structure can exhibit favorable abrasion resistance and hydrophilicity (dirt wiping-off property by wiping with a damp cloth) thereof can be improved. Examples of the oxyalkylene group having 2 to 4 carbon atoms may include an oxyethylene group, a 1,2-oxypropylene group, a 1,2-oxybutylene group, a 1,3-oxybutylene group, a 2,3-oxybutylene group, and a 1,4-oxybutylene group. These can be combined by random addition or block addition.

Examples of the method to introduce the (meth)acryloyl group into the (meth)acrylate (A) may include a method to synthesize an ester of acrylic acid by the dehydration condensation of a polyoxyalkylene alkyl ether of an alkylene oxide-modified alcohol with acrylic acid as raw materials. Examples of the polyoxyalkylene alkyl ether may include product name: NONION series of a nonionic surfactant manufactured by NOF CORPORATION. The synthetic method of the ester of acrylic can be appropriately selected from known synthetic methods.

In addition, the (meth)acrylate (A) can also be obtained by reacting an alkylene oxide-modified alcohol as a raw material with a compound having an isocyanate group and a (meth)acryloyl group in the molecule at the same time so as to form a urethane bond. Examples of the compound having an isocyanate group and a (meth)acryloyl group in the molecule at the same time may include product name: Karenz AOI, Karenz MOI, Karenz BEI and the like of Karenz series manufactured by Showadenkosya co., ltd.

It is preferable that the straight or branched chain alkyl group having 6 to 22 carbon atoms and the oxyalkylene group be directly bonded to each other. This structure is obtained by the addition of alkylene oxide to a saturated or unsaturated straight or branched chain alcohol having 6 to 22 carbon atoms.

In a case in which the polymerizable component (Z2) contains the (meth)acrylate (B) having an oxyethylene group, it is preferable that the oxyalkylene group of the (meth)acrylate (A) be also an oxyethylene group from the viewpoint of compatibility. In addition, a highly hydrophilic oxyethylene group is also preferable from the viewpoint of wiping-off property of dirt such as fingerprints by wiping with a damp cloth.

In the (meth)acrylate (A), the number of moles of the oxyalkylene group added is preferably 1 or more and 30 or less and more preferably 2 or more and 14 or less on average. The compatibility of the (meth)acrylate (A) with the active energy ray curable resin composition increases as the number of moles of the oxyalkylene group added increases, but the (meth)acrylate (A) is likely to be solid at room temperature as the crystallinity thereof increases when the number of moles of the oxyalkylene group added is too great. Hence, the number of moles of the oxyalkylene group added is preferably 30 or less, more preferably 14 or less, and even more preferably 10 or less. The (meth)acrylate (A) is hardly to be solid at room temperature and exhibits favorable handling property in a case in which the number of moles added is in this range.

The content of the (meth)acrylate (A) is preferably 0.1 % by mass or more, more preferably 0.2% by mass or more, and even more preferably 0.5% by mass or more in 100% by mass of the polymerizable component (Z2) from the viewpoint of obtaining a sufficient addition effect (especially abrasion resistance), and the content can be appropriately set in a range of 100% by mass or less as long as the desired effects such as abrasion resistance, the hydrophilicity of the fine relief structure surface are obtained. The content of the (meth)acrylate (A) can be set to 10% by mass or less, can also be set to 5% by mass or less, and can be further set to 2% by mass or less in 100% by mass of the polymerizable component (Z2) from the viewpoint of more highly maintaining the hydrophilicity of the fine relief structure surface while obtaining sufficient abrasion resistance and of obtaining more favorable dirt removing property.

Examples of the commercially available product of the (meth)acrylate (A) may include product name: Aronix M-120 manufactured by TOAGOSEI CO., LTD., product name: 50POEP-800B, 50AOEP-800B, PLE-200, ALE-200, ALE-800, PSE-200, PSE-400, and PSE-1300 of BLEMMER series and ASEP series manufactured by NOF CORPORATION, product name: CD277 and CD9075 manufactured by Sartomer Company, Inc., and product name: EH-10A, D2E-A, D2E-MA, and PH-10A manufactured by TOHO Chemical Industry Co., Ltd.

((Meth)acrylate (B))

The (meth)acrylate (B) is a compound having an oxyethylene group and two or more (meth)acryloyl groups.

As the (meth)acrylate (B) has an oxyethylene group, flexibility is imparted to the cured product of the active energy ray curable resin composition and thus it is possible to prevent the breakage or tearing of the fine relief structure and to improve the abrasion resistance thereof as well as the hydrophilicity of the fine relief structure surface is improved and thus it is possible to remove dirt such as fingerprints by wiping with a damp cloth.

With regard to the number of moles of the oxyethylene group added, the average number of the oxyethylene group per one (meth)acryloyl group is preferably 23 moles or less, more preferably 14 moles or less, and even more preferably 10 moles or less from the viewpoint of crystallinity or handling property at room temperature, and the average number is preferably 1 mole or more, more preferably 2 moles or more, and even more preferably 6 moles or more from the viewpoint of the hydrophilicity and flexibility of the fine relief structure.

Examples of the (meth)acrylate (B) may include

product name: A-200, A-400, A-600, A-1000, A-TMPT-3EO, A-TMPT-9EO, AT-20E, A-GLY-3E, A-GLY-9E, A-GLY-20E, ATM-4E, and ATM-35E of NK series manufactured by SHIN-NAKAMURA CHEMICAL CO., LTD.,
product Name: PE-200, PE-300, PE-600, and DPHA-12EO of NEW FRONTIER series manufactured by DKS Co., Ltd.,
product name: SR230, SR259, SR268, SR272, SR344, SR349, SR560, SR561, SR562, SR580, SR581, SR601, SR602, SR610, CD9038, SR101, SR150, SR205, SR209, SR210, SR231, SR252, SR348, SR480, SR540, SR541, SR542, CD542, SR603, SR740, SR9036, SR415, SR454, SR499, SR502, SR9035, and SR494 manufactured by Sartomer Company, Inc., and
product name: PEG400DA, R-551, R-712, THE-330, RP-1040, and DPEA-12 of KAYARAD series manufactured by Nippon Kayaku Co., Ltd.

The content of the (meth)acrylate (B) can be set in a range of 30 to 99.9% by mass in 100% by mass of the polymerizable component (Z2). The content is preferably 30% by mass or more, more preferably 50% by mass or more, and even more preferably 75% by mass or more from the viewpoint of obtaining a sufficient addition effect (especially hydrophilicity). The content is preferably 99.9% by mass or less, more preferably 90% by mass or less, and even more preferably 85% by mass or less from the viewpoint of obtaining sufficient abrasion resistance while obtaining sufficient dirt removing property by wiping with a damp cloth.

(Another polymerizable component (C))

Another polymerizable component (C) can be added for the purpose of the adjustment of viscosity and improvement in adhesive property of the active energy ray curable resin composition, the adjustment of hardness or of balance between hydrophilicity and hydrophobicity of the cured product of the active energy ray curable resin composition, and the impartment of antistatic performance to the fine relief structure surface.

Examples of another polymerizable component (C) added in order to increase the hardness of the cured product of the active energy ray curable resin composition may include

product Name: NEW FRONTIER PET-3 manufactured by DKS Co., Ltd.,
product name: TMPTA, PET-30, T-1420 (T), DPHA, D-310, DCPA-20, DPCA-30, and DPCA-60 of KAYARAD series manufactured by Nippon Kayaku Co., Ltd.,
product name: SR351 S, SR368, SR444, SR350, SR295, SR355, and SR399 manufactured by Sartomer Company, Inc.,
product name: UN-904, UN-906, H-219, UN-3320HS, UN-3320HA, UN-3320HB, and UN-3320HC manufactured by Negami Chemical Industrial Co., Ltd., and
product name: UA-306H, UA-306T, UA-306I, and UA-510H manufactured by Kyoeisha Chemical Co., LTD. As such component, it is possible to more suitably use a polyfunctional (meth)acrylate such as pentaerythritol (meth)acrylate or dipentaerythritol (meth)acrylate.

Examples of another polymerizable component (C) added in order to decrease the viscosity of or to impart adhesive property to the active energy ray curable resin composition may include

product name: DMAA, ACMO, NIPAM, DEAA, HEAA, VOZO, DMAPAA, and DMAEA manufactured by KOJIN CO., LTD.,
product name: HEA, HPA, 4-HBA, TBA, NOAA, IOAA, INAA, LA, STA, ISTA, IBXA, V#155, V#160, V#192, V#150, 2-MTA, V#190, V#230, V#260, V#310P, V#335HP, V#150D, V#190D, V#230D, V#3F, V#3FM, V#4F, V#8F, V#8FM, V#13F, MEDOL-10, MEDOL-10, 1-AdA, 1-AdMA, GBLA, and GBLMA manufactured by OSAKA ORGANIC CHEMICAL INDUSTRY LTD., and
product name: MT-1000, M-101A, M-102, M-111, M-113, M-117, M-220, M-225, M-270, M-140, and M-145 of ARONIX series manufactured by TOAGOSEI CO., LTD.

Examples of another polymerizable component (C) added in order to impart heat resistance or weather resistance to the cured product of the active energy ray curable resin composition may include

product name: Sumilizer GM and Sumilizer GS manufactured by Sumitomo Chemical Co., Ltd.,
product name: LA-82 and LA-87 of ADEKA STAB series manufactured by ADEKA CORPORATION, and
product name: RUVA-93 manufactured by Otsuka Chemical Co., Ltd.

Examples of another polymerizable component (C) added in order to impart antistatic performance to the cured product of the active energy ray curable resin composition may include

product name: DMAMC and GLBT manufactured by OSAKA ORGANIC CHEMICAL INDUSTRY LTD.,
product Name: NEW FRONTIER R-1220 manufactured by DKS Co., Ltd., and
product name: DMAPAA-TSMQ manufactured by KOJIN CO., LTD..

Examples of another polymerizable component (C) added in order to impart water repellency or slip property to the cured surface of the active energy ray curable resin composition may include

product name: BYK-UV3530, BYK-UV3570, and BYK-UV3500 manufactured by BYK-Chemie GmbH, and
product name: 2010, 2011, 2100, 2200N, 2250, 2300, 2500, 2600, 2650, and 2700 of TEGO Rad series manufactured by Evonik.

The content of these other polymerizable components (C) can be set to the remainder excluding the content of the (meth)acrylate (A) in 100% by mass of the polymerizable component (Z2) and can be set to the remainder excluding the content of the (meth)acrylate (A) and the content of the (meth)acrylate (B) in the case of containing the (meth)acrylate (B). For example, the content can be set to 0 to 69.9% by mass, 0 to 49.8% by mass, and 0 to 24.5% by mass. The amount of the other polymerizable component (C) added can be appropriately set in accordance with the purpose to add and the amounts of the (meth)acrylates (A) and (B) added.

(Photopolymerization initiator (D))

The photopolymerization initiator (D) is a compound that is already described in the first embodiment. As the active energy ray, ultraviolet light is preferable from the viewpoint of the apparatus cost or productivity. Examples of the photopolymerization initiator (D) which generates a radical by ultraviolet light may include the above compounds exemplified as the photopolymerization initiator (D) in the first embodiment.

The photopolymerization initiator (D) may be used singly or two or more kinds thereof may be used concurrently in the same manner as the photopolymerization initiator (D) in the first embodiment. In the case of concurrent use, it is preferable to concurrently use two or more kinds which have different absorption wavelengths. In addition, a thermal polymerization initiator such as a persulfate (potassium persulfate, ammonium persulfate, or the like), a peroxide (benzoyl peroxide, or the like), or an azo-based initiator may be used concurrently if necessary.

The content of the photopolymerization initiator (D) is preferably 0.01 to 10% by mass, more preferably 0.1 to 5% by mass, and even more preferably 0.2 to 3% by mass with respect to 100% by mass of the polymerizable component (Z2) in the same manner as the photopolymerization initiator (D) in the first embodiment. There is a case in which curing of the active energy ray curable resin composition is not completed and thus the mechanical properties of the article having the fine relief structure on the surface are impaired when the content of the photopolymerization initiator (D) is too low. There is a case in which the unreacted photopolymerization initiator (D) remains in the cured product and acts as a plasticizer and thus the elastic modulus of the cured product decreases and the abrasion resistance thereof is impaired when the content of the photopolymerization initiator (D) is too high. In addition, it is a cause of coloring in some cases.

(Ultraviolet absorber and/or antioxidant (additive (E)))

The active energy ray curable resin composition may further contain an ultraviolet absorber and/or an antioxidant as the additive (E).

Examples of the ultraviolet absorber may include ultraviolet absorbers which are benzophenone-based, benzotriazole-based, hindered amine-based, benzoate-based, and triazine-based. Examples of the commercially available product thereof may include product name: Tinuvin 400 and Tinuvin 479 manufactured by Ciba Specialty Chemicals Inc. and product name: Viosorb 110 manufactured by KYODO CHEMICAL CO., LTD.

Examples of the antioxidant may include antioxidants which are hindered phenol-based, benzimidazole-based, phosphorus-based, sulfur-based, and hindered amine-based. Examples of the commercially available product thereof may include product name: IRGANOX series manufactured by Ciba Specialty Chemicals Inc.

These ultraviolet absorbents and antioxidants may be used singly or two or more kinds thereof may be used concurrently.

The proportion of the ultraviolet absorber and/or antioxidant (additive (E)) is preferably 0.01 to 5% by mass in total with respect to 100% by mass of the polymerizable component (X), and specifically, it is preferable to add the ultraviolet absorber and/or antioxidant in a range in which the surface shape of the fine relief structure is not changed by bleeding out thereof.

(Other components)

The active energy ray curable resin composition according to the present embodiment may contain known additives such as a surfactant, a mole releasing agent, a lubricant, a plasticizer, an antistatic agent, a light stabilizer, a flame retardant, a flame retardant auxiliary, a polymerization inhibitor, a filler, a silane coupling agent, a coloring agent, a reinforcing agent, an inorganic filler, an impact modifier, a leveling agent, and a radical scavenger as the additive (E) if necessary. The additive (E) is preferably a non-polymerizable compound which does not have a polymerizable functional group (not contained in the polymerizable component (Z2)) and is not copolymerized with the polymerizable component (Z2), and this non-polymerizable compound is preferably a nonvolatile compound. In addition, it is preferable that the additive (E) not contain a volatile component such as a solvent which readily volatilizes and disappears. The amount of the additive (E) added can be defined by the content thereof per unit area of the fine relief structure layer containing the cured product of the active energy ray curable resin composition. It is possible to suppress a change in optical performance of the article due to bleeding out of the additive (E) by controlling this content. It is particularly important to decrease the amount of the additive bled out particularly in a case in which the average interval between adjacent convex portions of the fine relief structure is equal to or less than the wavelength of visible light. The content of the additive (E) is preferably 5 mg/m$^2$ or less or 5 $\mu$L/m$^2$ or less in the fine relief structure layer. It is difficult to sufficiently prevent a change in optical performance due to bleeding out of the additive (E) in a case in which the additive (E) is contained in an amount exceeding this range. This content is preferably 0.2 mg/m$^2$ or more or 0.2 $\mu$L/m$^2$ or more from the viewpoint of sufficiently obtaining an addition effect of the additive (E).

In addition, the active energy ray curable resin composition may contain an oligomer or a polymer which does not have a radical polymerizable functional group, an organic solvent in a trace amount, and the like if necessary. The components mentioned here can be added in the range in which the surface shape of the fine relief structure is not changed by bleeding out thereof.

The active energy ray curable resin composition according to the second embodiment described above contains a specific (meth)acrylate (A) and thus can form a cured product that exhibits favorable abrasion resistance and also favorable wiping-off property of dirt such as fingerprints.

Third embodiment

(Active energy ray curable resin composition)

The active energy ray curable resin composition according to the present embodiment is a resin composition which can be cured as the polymerization reaction of the polymerizable component contained in this composition proceeds by irradiating with an active energy ray. This active energy ray curable resin composition contains a polymerizable component (Z3) and the photopolymerization initiator (D) as essential components and further contains an antioxidant (F) having a polymerizable functional group as the polymerizable component (Z3).

(Polymerizable component (Z3))

Examples of the polymerizable component (Z3) may include a monomer, an oligomer, and a reactive polymer which have a radically polymerizable bond and/or a cationically polymerizable bond in the molecule. In the active energy ray curable resin composition, the content ratio of the polymerizable component (Z3) is preferably 80% by mass or more, more preferably 90% by mass or more, even more preferably 95% by mass or more from the viewpoint of obtaining the desired resin cured layer (fine relief structure layer).

Examples of the monomer having a radically polymerizable bond may include a monofunctional monomer, a bifunctional monomer, and a trifunctional or higher polyfunctional monomer. First, a polymerizable component (A) that is a component of the polymerizable component (Z3) excluding the antioxidant (F) will be described.

Examples of the monofunctional monomer of the polymerizable component (A) may include the above monofunctional monomers exemplified as the polymerizable component (Z1) in the first embodiment. These may be used singly or two or more kinds thereof may be used concurrently.

Examples of the bifunctional monomer of the polymerizable component (A) may include bifunctional monomers such as ethylene glycol di(meth)acrylate, diethylene glycol di(meth)acrylate, triethylene glycol di(meth)acrylate, polyethylene glycol #200 di(meth)acrylate, polyethylene glycol #300 di(meth)acrylate, polyethylene glycol #400 di(meth)acrylate, polyethylene glycol #600 di(meth)acrylate, polyethylene glycol #1000 di(meth)acrylate, dipropylene glycol di(meth)acrylate, tripropylene glycol di(meth)acrylate, polypropylene glycol #400 di(meth)acrylate, polypropylene glycol #700 di(meth)acrylate, polytetramethylene glycol #650 di(meth)acrylate, 2-hydroxy-3-acryloyloxypropyl methacrylate, alkoxylated bisphenol A di(meth)acrylate, 9,9-bis[4-(2-acryloyloxy ethoxy)phenyl]fluorene, tricyclodecanedimethanol di(meth)acrylate, 1,5-pentanediol di(meth)acrylate, 1,3-butylene glycol di(meth)acrylate, 1,6-hexanediol di(meth)acrylate, 1,9-nonanediol di(meth)acrylate, 1,10-decanediol di(meth)acrylate, neopentyl glycol di(meth)acrylate, isocyanuric acid ethylene oxide-modified di(meth)acrylate, hydroxypivalic acid neopentyl glycol di(meth)acrylate, 1,6-hexanediol-ethylene oxide-modified di(meth)acrylate, bisphenol A ethylene oxide-modified di(meth)acrylate, neopentyl glycol ethylene oxide-modified di(meth)acrylate, a bifunctional urethane (meth)acrylate, a bifunctional epoxy (meth)acrylate, a bifunctional polyester (meth)acrylate, a bifunctional silicone acrylate, divinylbenzene, and methylenebisacrylamide. These may be used singly or two or more kinds thereof may be used concurrently.

Examples of the trifunctional or higher polyfunctional monomer of the polymerizable component (A) may include a trifunctional monomer such as pentaerythritol tri-tetra (meth)acrylate, trimethylolpropane tri(meth)acrylate, trimethylolpropane ethylene oxide-modified tri(meth)acrylate, trimethylolpropane propylene oxide-modified triacrylate, pentaerythritol ethylene oxide-modified tetra(meth)acrylate, dipentaerythritol ethylene oxide-modified hexa(meth)acrylate, pentaerythritol polyethylene oxide-modified poly(meth)acrylate, polyfunctional pendant (meth)acrylate obtained by only polymerizing the vinyl ether group of 2-(2-vinyloxyethoxy)ethyl (meth)acrylate, polyglycerin ethylene oxide-modified poly(meth)acrylate, sorbitol ethylene oxide-modified hexaacrylate, or isocyanuric acid ethylene oxide-modified tri(meth)acrylate; a condensation reaction mixture of succinic acid/trimethylolethane/acrylic acid, dipentaerythritol penta-hexa(meth)acrylate, ditrimethylolpropane tetraacrylate, polypentaerythritol poly(meth)acrylate, a tri- or higher functional urethane (meth)acrylate, a tri- or higher functional epoxy (meth) acrylate, a tri- or higher functional polyester (meth)acrylate, and a tri- or higher functional silicone acrylate. These may be used singly or two or more kinds thereof may be used concurrently.

Examples of the polymerizable component (A) having a cationically polymerizable bond may include a monomer having an epoxy group, an oxetanyl group, an oxazolyl group, a vinyloxy group, or the like, and a monomer having an epoxy group is particularly preferable.

Examples of the oligomer or the reactive polymer of the polymerizable component (A) may include an unsaturated polyester such as a condensate of an unsaturated dicarboxylic acid with a polyhydric alcohol; a (meth)acrylate such as polyester (meth)acrylate, polyether (meth)acrylate, polyol (meth)acrylate, epoxy (meth)acrylate, or urethane (meth)acrylate; a cationically polymerizable epoxy compound; and any homopolymer or copolymer of the above-mentioned monomers having a radically polymerizable bond in the side chain.

Among the above polymerizable components (A), it is preferable to use a (meth)acrylate having a polyoxyalkylene structure. Flexibility is imparted to the fine relief structure as a (meth)acrylate having a polyoxyalkylene structure is used, and thus the destruction of the relief structure due to its hardness or brittleness can be prevented. Hence, it is possible to improve the abrasion resistance of the fine relief structure. The polymerizable component (A) preferably contains such (meth)acrylate having a polyoxyalkylene structure and another (meth)acrylate-based polymerizable component that is easily copolymerized with the (meth)acrylate. In addition, the (meth)acrylate having a polyoxyalkylene structure and the other (meth)acrylate-based polymerizable component are preferably a bifunctional or higher polyfunctional (meth)acrylate-based polymerizable component.

Examples of the polyoxyalkylene structure may include a polyoxyethylene structure, a polyoxypropylene structure, a polyoxytrimethylene structure, a polyoxybutylene structure, a polyoxytetramethylene structure, and a polyoxypentamethylene structure. Among these, a polyoxyethylene structure that does not have a methyl group, a polyoxytrimethylene structure, and a polyoxytetramethylene structure are preferable since the mobility of the molecular chain can be secured and thus the fine relief structure is hardly destroyed. Furthermore, a polyoxyethylene structure is more preferable from the viewpoint that high hydrophilicity can be imparted to the fine relief structure surface and thus the antifouling property thereof can be further enhanced.

(Antioxidant (F))

The antioxidant (F) has a polymerizable functional group and is contained in the polymerizable component (Z3). Examples of the antioxidant (F) may include those having a radically polymerizable bond and/or a cationically polymerizable bond in the molecule as a polymerizable functional group. As the polymerizable functional group which the antioxidant (F) has is preferably a (meth)acryloyl group.

Examples of the antioxidant (F) may include a primary antioxidant to stop the oxidative decomposition reaction by a radical chain having a radical scavenging ability and a secondary antioxidant having peroxide decomposing ability. Examples of the primary antioxidant may include a phenolic antioxidant or a hindered amine-based antioxidant. In addition, examples of the hindered amine-based antioxidant may include a hindered amine compound having a (meth)acryloyl group, and examples of the phenolic antioxidant may include a compound that has a hydroxyl group in an aromatic ring as a substituent and has an (meth)acryloyl group in the same molecule. Examples of the secondary antioxidant may include a phosphorus-based antioxidant or a sulfur-based antioxidant. A metal deactivator also exhibits antioxidant action in addition to them. This is because the transition metal reacts with hydroperoxide to generate a harmful peroxy radical. As the metal deactivator, there are a type which forms an inactive chelate compound through the reaction with a metal ion and a type which is adsorbed on the metal surface to form a protective film, and the type which forms an inactive chelate compound through the reaction with a metal ion is preferable in the case of using as the antioxidant (F). Examples of the type which forms an inactive chelate compound through the reaction with a metal ion may include a thiocarbamate or a salicylic acid.

Among these, a primary antioxidant having a radical scavenging ability is preferable as the antioxidant (F). In the antioxidant (F), examples of the antioxidant which has radical scavenging ability and a polymerizable functional group may include 1,2,2,6,6-pentamethyl-4-piperidyl (meth)acrylate (for example, trade name: ADEKA STAB LA-82 and the like manufactured by ADEKA CORPORATION), 2,2,6,6-tetramethyl-4-piperidyl (meth)acrylate (for example, trade name: ADEKA STAB LA-87 manufactured by ADEKA CORPORATION), 2-tert-butyl-6-(3-tert-butyl-2-hydroxy-5-methylbenzyl)-4-methylphenyl acrylate (trade name: Sumilizer GM manufactured by Sumitomo Chemical Co., Ltd.), and 2-[1-(2-hydroxy-3,5-di-tert-pentylphenyl)ethyl]-4,6-di-tert-pentylphenyl acrylate (trade name: Sumilizer GS manufactured by Sumitomo Chemical Co., Ltd.).

The amount of the antioxidant (F) added is preferably 0.01% by mass or more, more preferably 0.05% by mass or more, and even more preferably 0.1% by mass or more and is preferably 10% by mass or less, more preferably 5% by mass or less, and even more preferably 1% by mass or less in the polymerizable component (Z3). There is a possibility that the abrasion resistance of the fine relief structure surface is impaired or the hydrophilicity thereof is impaired so as to lose the antifouling property when the amount added is too great. In addition, in a case in which the antioxidant (F) has a radical scavenging ability and the polymerizable component (Z3) is radically polymerizable, there is a possibility that the curing through the radical polymerization reaction of the polymerizable component (Z3) is inhibited when the amount of the antioxidant (F) added is too great. There is a possibility that the antioxidant effect is not sufficiently exerted when the amount added is too small.

In addition, plural kinds of the antioxidants (F) may be used at the same time. In that case, the combination which exerts a synergistic effect is preferable and the combination which does not cause the antagonistic action is preferable. For example, it is known that a hindered phenolic antioxidant exerts a regenerative effect of a phenolic antioxidant in some cases. In addition, there is a method in which a primary antioxidant is combined with a secondary antioxidant so as to exert a synergistic effect. As the antagonistic action, coloring caused by a specific combination is known.

(Photopolymerization initiator (D))

The photopolymerization initiator (D) is a compound that is already described in the first embodiment. As the active energy ray, ultraviolet light is preferable from the viewpoint of the apparatus cost or productivity. Examples of the photopolymerization initiator (D) which generates a radical by ultraviolet light may include the above compounds exemplified as the photopolymerization initiator (D) in the first embodiment.

The photopolymerization initiator (D) may be used singly or two or more kinds thereof may be used concurrently in the same manner as the photopolymerization initiator (D) in the first embodiment. In the case of concurrent use, it is preferable to concurrently use two or more kinds which have different absorption wavelengths. In addition, a thermal polymerization initiator such as a persulfate (potassium persulfate, ammonium persulfate, or the like), a peroxide (benzoyl peroxide, or the like), or an azo-based initiator may be used concurrently if necessary.

The content of the photopolymerization initiator (D) is preferably 0.01 to 10% by mass, more preferably 0.1 to 5% by mass, and even more preferably 0.2 to 3% by mass with respect to 100% by mass of the polymerizable component (Z3) in the same manner as the photopolymerization initiator (D) in the first embodiment. There is a case in which curing of the active energy ray curable resin composition is not completed and thus the mechanical properties of the article having the fine relief structure on the surface are impaired when the content of the photopolymerization initiator (D) is too low. There is a case in which the unreacted photopolymerization initiator (D) remains in the cured product and acts as a plasticizer and thus the elastic modulus of the cured product decreases and the abrasion resistance thereof is impaired when the content of the photopolymerization initiator (D) is too high. In addition, it is a cause of coloring in some cases.

(Additive (E))

The active energy ray curable resin composition according to an embodiment of the invention may further contain the additive (E). The additive (E) is preferably a non-polymerizable compound which does not have a polymerizable functional group (not contained in the polymerizable component (Z3)) and is not copolymerized with the polymerizable component (Z3), and this non-polymerizable compound is preferably a nonvolatile compound. In addition, it is preferable that the additive (E) not contain a volatile component such as a solvent which readily volatilizes and disappears.

Examples of the additive (E) may include known additives such as a polymerization inhibitor, a surfactant, a mole releasing agent, a leveling agent, a lubricant, a plasticizer, an antistatic agent, a light stabilizer, a radical scavenger, an antioxidant, a flame retardant, a flame retardant auxiliary, a filler, an ultraviolet absorber, a silane coupling agent, a coloring agent, a reinforcing agent, an inorganic filler, and an impact modifier.

Among these, the polymerization inhibitor and the mold releasing agent are components which are highly required to be added to the active energy ray curable resin composition.

Examples of the polymerization inhibitor may include the above polymerization inhibitors exemplified as the polymerization inhibitor in the first embodiment. Among the polymerization inhibitors, a phenolic polymerization inhibitor such as BHT can also be used as an antioxidant.

Examples of the mold releasing agent may include the above mold releasing agents exemplified as the mold releasing agent in the first embodiment. These may be used singly or two or more kinds thereof may be used concurrently. Among these, those which contain a (poly)oxyalkylene alkyl phosphate compound as a main component is preferable.

As the (poly)oxyalkylene alkyl phosphate compound, a compound represented by Formula (1) above is preferable from the viewpoint of mold releasing property. In Formula (1), $R^1$ is preferably an alkyl group having 1 to 20 carbon atoms and more preferably an alkyl group having 3 to 18 carbon atoms. $R^2$ is preferably an alkylene group having 1 to 4 carbon atoms and more preferably an alkylene group having 2 to 3 carbon atoms. m is preferably an integer of 1 to 10. The (poly)oxyalkylene alkyl phosphate compound represented by Formula (1) may be any of a monoester (n = 1), a diester (n = 2), or a triester (n = 3). In addition, a plurality of the (poly)oxyalkylene alkyl groups in one molecule may be different from one another in the case of a diester or a triester.

Examples of the commercially available product of the (poly)oxyalkylene alkyl phosphate compound may include the above commercially available products exemplified as the mold releasing agent in the first embodiment. These (poly)oxyalkylene alkyl phosphate compounds may be used singly or two or more kinds thereof may be used concurrently. The mold releasing agents mentioned here also exert a function as a surfactant, a leveling agent, or a lubricant in some cases.

Examples of the light stabilizer may include a hindered amine-based antioxidant. Examples of the primary antioxidant that is a hindered amine-based radical scavenger may include the above light stabilizers exemplified as the light stabilizer of the first embodiment.

The additives (E) mentioned here include those which have the same effect as the antioxidant (F), but it is possible to add those additives for the purpose to supplement the function of the antioxidant (F).

Examples of the ultraviolet absorber may include ultraviolet absorbers which are benzophenone-based, benzotriazole-based, benzoate-based, and triazine-based. Examples of the commercially available product thereof may include trade name: Tinuvin 400 and Tinuvin 479 manufactured by BASF and trade name: Viosorb 110 manufactured by KYODO CHEMICAL CO., LTD.

Examples of the antioxidant may include antioxidants which are hindered phenol-based, benzimidazole-based, phosphorus-based, and sulfur-based in addition to those which are mentioned above. Examples of the commercially available product thereof may include trade name: "IRGANOX" series manufactured by BASF. The additives (E) mentioned here include those which have the same effect as the antioxidant (F), but it is possible to add those additives for the purpose to supplement the function of the antioxidant (F).

The amount of the additive (E) added can be defined by the content thereof per unit area of the fine relief structure layer containing the cured product of the active energy ray curable resin composition. It is possible to suppress a change in optical performance of the article due to bleeding out of the additive (E) by controlling this content. It is particularly important to decrease the amount of the additive bled out particularly in a case in which the average interval between adjacent convex portions of the fine relief structure is equal to or less than the wavelength of visible light. The content of the additive (E) is 5 mg/m$^2$ or less or 5 $\mu$L/m$^2$ or less in the fine relief structure layer. It is difficult to sufficiently prevent a change in optical performance due to bleeding out of the additive (E) in a case in which the additive (E) is contained in an amount exceeding this range. This content is preferably 0.2 mg/m$^2$ or more or 0.2 $\mu$L/m$^2$ or more from the viewpoint of sufficiently obtaining an addition effect of the additive (E).

The additive (E) preferably includes at least one of the polymerization inhibitor and the mold releasing agent. As this polymerization inhibitor, it is preferable to contain at least one kind selected from the hydroquinone-based polymerization inhibitor described above, the phenolic polymerization inhibitor described above, or the phenothiazine-based polymerization inhibitor described above, and it is particularly preferable to contain the hydroquinone-based polymerization inhibitor. As the mold releasing agent, it is preferable to contain at least one kind of the mold releasing agents described above, and it is particularly preferable to contain the (poly)oxyalkylene alkyl phosphate compound. The total amount of the polymerization inhibitor and the mold releasing agent is preferably 5 mg/m$^2$ or less or 5 $\mu$L/m$^2$ or less and preferably 0.2 mg/m$^2$ or more or 0.2 $\mu$L/m$^2$ or more in the fine relief structure layer. This total content is preferably 0.2 mg/m$^2$ or more or 0.2 $\mu$L/m$^2$ or more from the viewpoint of sufficiently obtaining an addition effect of the additive (E).

(Other components)

The active energy ray curable resin composition according to the present embodiment may contain an oligomer or a polymer which does not have a radical polymerizable functional group, an organic solvent in a trace amount, and the like if necessary in the range in which the effect of the invention is not inhibited.
In the active energy ray curable resin composition according to the third embodiment described above, the polymerizable component (Z3) contains a specific antioxidant (F), and thus the article according to an embodiment of the invention is excellent in durability.
The active energy ray curable resin composition according to the first, second, and third embodiments described above will be further described.

(Acrylic equivalent of active energy ray curable resin composition)

It is possible to adjust the hardness of the cured product of the active energy ray curable resin composition to an appropriate range by adjusting the acrylic equivalent of the active energy ray curable resin composition.
The acrylic equivalent is a numerical value represented by the molecular weight per one (meth)acryloyl group. The concentration of the (meth)acryloyl group is higher as the acrylic equivalent is smaller, and thus a cured product having a higher crosslinking density is obtained. In contrast, the concentration of the (meth)acryloyl group is lower as the acrylic equivalent is greater, and thus a cured product having a lower crosslinking density is obtained.
The acrylic equivalent of the active energy ray curable resin composition is expressed by the following Equation (2) using the mass ratios of the respective components [% by mass] of W1, W2, W3, ..., the molecular weights of the respective components [g/mol] of M1, M2, M3, ..., and the numbers of the functional groups in the respective components of F1, F2, F3, ....

$$\text{Acrylic equivalent [g/eq]} = 1/(F1 \times W1/M1/100 + F2 \times W2/M2/100 + F3 \times$$

$$W3/M3/100 + ...) \qquad \text{(Equation 2)}$$

The acrylic equivalent of the active energy ray curable resin composition is preferably 130 [g/eq] or more and 600 [g/eq] or less and more preferably 200 [g/eq] or more and 400 [g/eq] or less.
The crosslinking density is high when the acrylic equivalent of the active energy ray curable resin composition forming the fine relief structure is too small, thus the projections become brittle to be easily broken or scraped, and the abrasion resistance of the fine relief structure decreases as a result.
On the other hand, the crosslinking density is low when the acrylic equivalent is too great, thus the cured product itself is too soft and the cured product at the part where the fine relief structure does not exist is significantly scraped or scooped to be scratched, and the abrasion resistance decreases, or the projections (convex portions) come in contact with one another to easily coalesce into one depending on the fine relief structure. There is a case in which the surface looks turbid by the scattering of light when the projections coalesce into one.

(Viscosity of active energy ray curable resin composition)

It is preferable that the viscosity of the active energy ray curable resin composition be not too high from the viewpoint that the active energy ray curable resin composition easily flows into the fine relief structure on the surface of the stamper. Hence, the viscosity of the active energy ray curable resin composition measured at 25°C by a rotary B type viscometer is preferably 10000 mPa·s or less, more preferably 5000 mPa·s or less, and even more preferably 2000 mPa·s or less.
However, there is no particular problem even when the viscosity of the active energy ray curable resin composition exceeds 10000 mPa·s as long as it is possible to lower the viscosity by warming the active energy ray curable resin composition in advance at the time of being brought into contact with the stamper. In this case, the viscosity of the active energy ray curable resin composition measured at 70°C by a rotary B type viscometer is preferably 5000 mPa·s or less and more preferably 2000 mPa·s or less. There is a case in which the active energy ray curable resin composition is wet to spread out and the production is hindered when this viscosity is too low, and thus the viscosity is preferably 10 mPa·s or more.

(Article having fine relief structure)

It is possible to form an article having a fine relief structure using the active energy ray curable resin composition according to the first, second, and third embodiments described above.

The article according to an embodiment of the invention has a fine relief structure on the surface, the fine relief structure being formed by bringing the active energy ray curable resin composition described above into contact with a stamper having the inverted structure of the fine relief structure on the surface and curing the active energy ray curable resin composition.

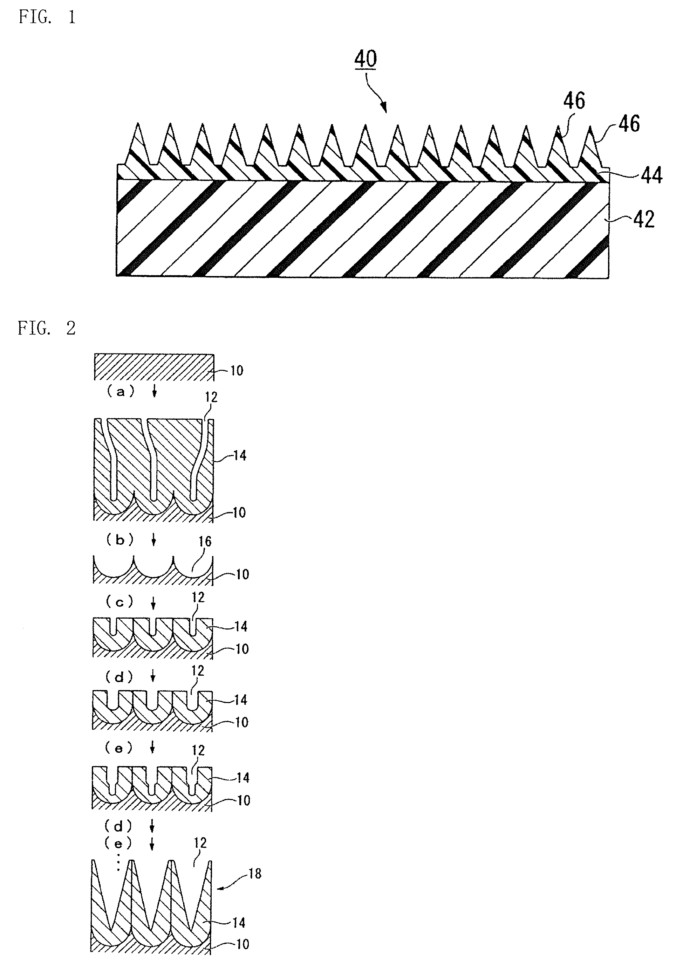

Fig. 1 is a cross-sectional view illustrating an example of an article equipped with a fine relief structure layer. An article 40 includes a substrate 42 and a cured resin layer 44 formed on the surface of the substrate 42. The cured resin layer 44 is a fine relief structure layer having a plurality of convex portions 46 on its surface.

The thickness of the fine relief structure layer can be set in a range of 0.5 to 100 $\mu$m. This thickness is preferably 0.5 $\mu$m or more and more preferably 1 $\mu$m or more from the viewpoint of forming the desired fine relief structure on the surface. From the viewpoint of suppressing bleeding out, this thickness can be set to 100 $\mu$m or less and is preferably 50 $\mu$m or less, more preferably 20 $\mu$m or less, even more preferably 13 $\mu$m or less, and particularly preferably 10 $\mu$m or less.

As the substrate 42, a molded body that transmits light is preferable. Examples of the material of the substrate may include an acrylic resin (polymethyl methacrylate or the like), a polycarbonate, a styrene (co)polymer, a methyl methacrylate-styrene copolymer, cellulose diacetate, cellulose triacetate, cellulose acetate butyrate, a polyester (polyethylene terephthalate or the like), a polyamide, a polyimide, a polyether sulfone, a polysulfone, a polyolefin (polyethylene, polypropylene, or the like), polymethyl pentene, polyvinyl chloride, polyvinyl acetal, polyether ketone, a polyurethane, and glass.

The substrate 42 may be an injection molded body, an extrusion molded body, or a cast molded body. The shape of the substrate 42 may be a sheet shape or a film shape. The surface of the substrate 42 may be subjected to a coating treatment, a corona treatment, or the like for an improvement in adhesive property, antistatic property, abrasion resistance, weather resistance, or the like.

The cured resin layer 44 is a film consisting of the cured product of the active energy ray curable resin composition and has a fine relief structure on the surface.

In the case of using a stamper of anodized alumina to be described later, the fine relief structure on the surface of the article 40 is formed by transferring the fine relief structure on the surface of anodized alumina and has a plurality of convex portions 46 consisting of the cured product of the active energy ray curable resin composition.

As the fine relief structure, the so-called moth-eye structure is preferable in which a plurality of projections (convex portions) having a substantially conical shape, a pyramid shape, or the like are lined up. The moth-eye structure in which the interval between the projections is equal to or less than the wavelength of visible light is known to be an effective antireflection means as the refractive index continuously increases from the refractive index of air to the refractive index of the material.

In this fine relief structure called moth-eye structure, it is important to set the aspect ratio of the concave and convex (height of convex portion/average interval between convex portions) that is the balance between the average interval between the convex portions and the height of the convex portion in a specific range in order to achieve both the antireflection performance and the abrasion resistance.

The average interval between adjacent convex portions is preferably equal to or less than the wavelength of visible light, that is, 400 nm or less. The scattering of visible light is likely to occur when the average interval is too large. The average interval between adjacent convex portions is preferably 400 nm or less, more preferably 380 nm or less, even more preferably 250 nm or less, and even more preferably 200 nm or less from the viewpoint of suppressing the scattering of visible light and applying to an optical use such as an antireflective article. The average interval is preferably 80 nm or more, more preferably 100 nm or more, and even more preferably 160 nm or more from the viewpoint of the desired effect of the fine relief structure or ease of molding.

The average interval between adjacent convex portions is a value obtained by measuring the interval between adjacent convex portions (distance from the center of a convex portion to the center of an adjacent convex portion) through the electron microscopic observation at 50 points and averaging these values.

The antireflection performance is mostly determined by the height of the projection (convex portion) when the average interval between adjacent convex portions is in the preferred range described above. It is possible to set the height of the convex portion in a range of 120 to 250 nm in order to obtain favorable antireflection performance. The height of the convex portion is preferably 250 nm or less, more preferably 220 nm or less, and even more preferably 190 nm or less from the viewpoint of suppressing the phenomenon that the concave and convex come in contact with one another to coalesce into one. In addition, the height of the convex portion is preferably 120 nm or more, more preferably 150 nm or more, and even more preferably 160 nm or more from the viewpoint of keeping the reflectance at low and suppressing the wavelength dependence of the reflectance.

The height of the projection is a value obtained by measuring the distance between the topmost part of a convex portion and the bottommost part of a concave portion present between convex portions when the fine relief structure is observed at 30,000 magnifications using an electron microscope.

The aspect ratio of the concave and convex portion (height of convex portion/average interval between convex portions) can be set in a range of 0.5 to 3.0. The aspect ratio is preferably 0.5 or more and more preferably 0.8 or more from the viewpoint of sufficiently suppressing the reflectance. The aspect ratio is preferably 3.0 or less, more preferably 2.5 or less, and even more preferably 1.2 or less from the viewpoint of improving the abrasion resistance.

The shape of the convex portion is preferably a shape in which the cross-sectional area of the convex portion of the cross section along a direction orthogonal to the height direction (substrate plane direction) continuously increases from the uppermost surface in the depth direction, that is, the cross-sectional shape along the height direction of the convex portion (vertical direction to the substrate plane) is preferably a triangular shape, a trapezoidal shape, or a bell shape.

The difference between the refractive index of the cured resin layer 44 and the refractive index of the substrate 42 is preferably 0.2 or less, more preferably 0.1 or less, and particularly preferably 0.05 or less. It is possible to suppress reflection at the interface between the cured resin layer 44 and the substrate 42 as the difference in refractive index is smaller.

(Stamper)

The stamper is one which has the inverted structure of a fine relief structure on the surface. Examples of the material of the stamper may include a metal (including those having an oxidized film formed on the surface), quartz, glass, a resin, and a ceramic. Examples of the shape of the stamper may include a roll shape, a circular tube shape, a flat plate shape, and a sheet shape.

Examples of the method of fabricating a stamper may include the following method (I-1) and method (I-2), and the method (I-1) is particularly preferable from the viewpoint of being able to provide a large area and simple fabrication.

(I-1) A method in which anodized alumina having a plurality of pores (concave portions) is formed on the surface of an aluminum substrate.
(I-2) A method in which the inverted structure of a fine relief structure is formed on the surface of a stamper substrate by electron beam lithography, laser beam interferometry, or the like.

As the aluminum substrate, an electrolytic aluminum plated substrate coated with aluminum by electroplating may be used.

As the method (I-1), a method having the following Steps (a) to (f) is preferable.

(a) A step of forming an oxide film on the surface of an aluminum substrate by anodizing the aluminum substrate in an electrolytic solution under a constant voltage.
(b) A step of removing the oxide film to form pore generating points of anodization on the surface of the aluminum substrate.
(c) A step of forming an oxide film having pores at the pore generating points of anodization by anodizing the aluminum substrate again in the electrolytic solution after Step (b).
(d) A step of enlarging the diameter of the pores after Step (c).
(e) A step of anodizing the aluminum substrate again in the electrolytic solution after Step (d).
(f) A step of obtaining a stamper in which anodized alumina having a plurality of pores is formed on the surface of an aluminum substrate by repeatedly carrying out Step (d) and Step (e).

Step (a) can be carried out as follows. As illustrated in Fig. 2, an oxide film 14 having pores 12 is formed when an aluminum substrate 10 is anodized. Examples of the shape of the aluminum substrate may include a roll shape, a circular tube shape, a flat plate shape, and a sheet shape. It is preferable that the aluminum substrate be subjected to the degreasing treatment in advance since the oil used at the time of machining the aluminum substrate into a predetermined shape adheres thereto in some cases. In addition, it is preferable that the aluminum substrate be subjected to the electrolytic polishing treatment (etching treatment) in order to smooth the surface state. The purity of aluminum is preferably 99% or more, more preferably 99.5% or more, and particularly preferably 99.8% or more. When the purity of aluminum is low, a relief structure having a size large enough to scatter visible light by the segregation of the impurities is formed when aluminum is anodized or the regularity of the pores obtained by the anodization decreases in some cases. Examples of the electrolytic solution may include sulfuric acid, oxalic acid, and phosphoric acid.

The anodization using oxalic acid as the electrolytic solution can be carried out as follows. The concentration of oxalic acid is preferably 0.8 M or less. The current is too high when the concentration of oxalic acid exceeds 0.8 M, and thus the surface of the oxide film is roughened in some cases. The formation voltage is preferably in the range of 30 to 100 V. It is possible to obtain anodized alumina which has a cycle of 100 nm to 200 nm and highly regular pores when the formation voltage is in this range. The regularity tends to decrease when the formation voltage is higher or lower than this range. The temperature of the electrolytic solution is preferably 60°C or lower and more preferably 45°C or lower. When the temperature of the electrolytic solution exceeds 60°C, a phenomenon so-called "burning" occurs, and thus the pores are broken or the surface melts and the regularity of pore is disturbed in some cases.

The anodization using sulfuric acid as the electrolytic solution can be carried out as follows. The concentration of sulfuric acid is preferably 0.7 M or less. The current is too high when the concentration of sulfuric acid exceeds 0.7 M, and thus it is not possible to maintain a constant voltage in some cases. The formation voltage is preferably in a range of 25 to 30 V. It is possible to obtain anodized alumina which has a cycle of 63 nm and highly regular pores when the formation voltage is in this range. The regularity tends to decrease even if the formation voltage is higher or lower than this range. The temperature of the electrolytic solution is preferably 30°C or lower and more preferably 20°C or lower. When the temperature of the electrolytic solution exceeds 30°C, a phenomenon so-called "burning" occurs, and thus the pores are broken or the surface melts and the regularity of pore is disturbed in some cases.

Step (b) can be carried out as follows. As illustrated in Fig. 2, the oxide film 14 is removed to form pore generating points 16 of anodization on the surface of the substrate. This makes it possible to improve the regularity of the pores of the oxide film to be formed later. Examples of the method to remove the oxide film 14 may include a method in which the oxide film is removed by being dissolved in a solution that does not dissolve aluminum but selectively dissolves the oxide film. Examples of such solution may include a mixed solution of chromic acid/phosphoric acid.

Step (c) can be carried out as follows. As illustrated in Fig. 2, the oxide film 14 having cylindrical pores 12 is formed when the aluminum substrate 10 from which the oxide film has been removed is anodized again. The anodization can be carried out under the same conditions as in Step (a). It is possible to obtain deeper pores as the anodization time is longer.

Step (d) can be carried out as follows. As illustrated in Fig. 2, a treatment to enlarge the diameter of the pores 12 (hereinafter, referred to as the pore size enlarging treatment) is conducted. The pore size enlarging treatment is a treatment to enlarge the diameter of the pores obtained by the anodization by immersing in a solution that dissolves the oxide film. Examples of such solution may include an aqueous solution of phosphoric acid at about 5% by mass. The pore size is greater as the time of the pore size enlarging treatment is longer.

Step (e) can be carried out as follows. As illustrated in Fig. 2, cylindrical pores which extend down from the bottom of the cylindrical pores 12 and have a small diameter are formed when the anodization is conducted again. The anodization can be conducted under the same conditions as in Step (a). It is possible to obtain deeper pores as the anodization time is longer.

Step (f) can be carried out as follows. As illustrated in Fig. 2, the oxide film 14 having the pores 12 having a shape of which the diameter continuously decreases from the opening in the depth direction is formed when the pore size enlarging treatment of Step (d) and the anodization of Step (e) are repeatedly conducted, thereby obtaining a stamper 18 having anodized alumina (porous oxide film of aluminum (alumite)) on the surface of the aluminum substrate 10. It is preferable that Step (d) be the final step in this fabrication.

The number of repetitions of these steps is preferably 3 times or more and more preferably 5 times or more in total. The diameter of the pores discontinuously decreases when the number of repetitions is 2 times or less, and thus the reflectance decreasing effect of the moth-eye structure formed using anodized alumina having such pores is insufficient.

Examples of the shape of the pores 12 may include a substantially conical shape, a pyramid shape, and a cylindrical shape, and a shape in which the pore cross-sectional area of the cross section along a direction orthogonal to the depth direction continuously decreases from the outermost surface in the depth direction such as a conical shape or a pyramid shape is preferable.

The average interval between the pores 12 can be formed in accordance with a predetermined fine relief structure. The average interval between the pores is preferably equal to or less than the wavelength of visible light, namely, 400 nm or less, more preferably 380 nm or less, even more preferably 250 nm or less, and even more preferably 200 nm or less. In addition, the average distance between the pores is preferably 80 nm or more, more preferably 100 nm or more, and particularly preferably 160 nm or more.

The average interval between the pores 12 is a value obtained by measuring the interval between the adjacent pores 12 (distance from the center of a pore 12 to the center of an adjacent pore 12) through the electron microscopic observation at 50 points and averaging these values.

The depth of the pores 12 can be formed in accordance with a predetermined fine relief structure. The depth of the pores is preferably 250 nm or less, more preferably 220 nm or less, and even more preferably 190 nm or less. In addition, the depth of the pores is preferably 120 nm or more, more preferably 150 nm or more, and even more preferably 160 nm or more.

The depth of the pores 12 is a value obtained by measuring the distance between the bottommost part of the pore 12 and the topmost part of a convex portion present between the pores 12 when the fine relief structure is observed at 30,000 magnifications using an electron microscope.

The aspect ratio of the pores 12 (depth of pores/average interval between pores) can be set in accordance with a predetermined fine relief structure, and the aspect ratio can be set in a range of 0.5 to 3.0 and is preferably set in a range of 0.8 to 1.2.

The surface on the side where the fine relief structure is formed of the stamper may be treated with a mold releasing agent. Examples of the mold releasing agent may include a silicone resin, a fluorine resin, a fluorine compound, and an ester of phosphoric acid, and an ester of phosphoric acid is particularly preferable. As the ester of phosphoric acid, a (poly)oxyalkylene alkyl phosphate compound is preferable, and examples of the commercially available product may include trade name: JP-506H manufactured by JOHOKU CHEMICAL CO., LTD., trade name: MOLD WIZ INT-1856 manufactured by Axel Plastics Research Laboratories, Inc., and trade name: TDP-10, TDP-8, TDP-6, TDP-2, DDP-10, DDP-8, DDP-6, DDP-4, DDP-2, TLP-4, TCP-5, and DLP-10 manufactured by Nikko Chemicals Co., Ltd.

(Method of manufacturing article)

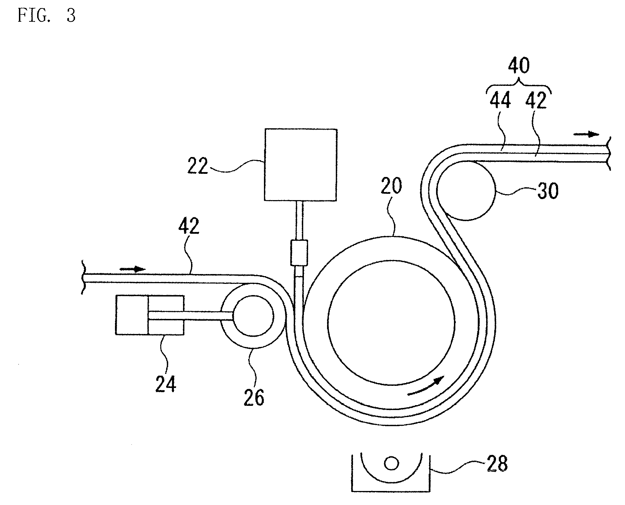

An article having a fine relief structure on the surface can be manufactured as follows, for example, using a manufacturing apparatus illustrated in Fig. 3.

An active energy ray curable resin composition is supplied to between a roll-shaped stamper 20 having an inverted structure of a fine relief structure (not illustrated) on the surface and a substrate 42 that is a belt-shaped film moving along the surface of the roll-shaped stamper 20 from a tank 22.

The substrate 42 and the active energy ray curable resin composition are sandwiched between the roll-shaped stamper 20 and a nip roll 26 of which the nip pressure has been adjusted by a pneumatic cylinder 24, the active energy ray curable resin composition is uniformly spread out between the substrate 42 and the roll-shaped stamper 20 and filled in the concave portions of the fine relief structure of the roll-shaped stamper 20 at the same time.

The active energy ray curable resin composition is irradiated with an active energy ray through the substrate 42 from an active energy ray irradiating device 28 installed below the roll-shaped stamper 20 to cure the active energy ray curable resin composition, thereby forming a cured resin layer 44 on which the fine relief structure on the surface of the roll-shaped stamper 20 is transferred.

The substrate 42 having the cured resin layer 44 formed on the surface is peeled off from the roll-shaped stamper 20 by a peeling roll 30, whereby the article 40 as illustrated in Fig. 1 is obtained.

As the active energy ray irradiating device 28, a high pressure mercury lamp, a metal halide lamp, or the like is preferable, and the photoirradiation energy quantity in this case is preferably 100 to 10000 mJ/cm$^2$.

As the substrate 42, a light transmissive film can be used, and examples of the material of the film may include an acrylic resin, a polycarbonate, a styrene resin, a polyester, a cellulose resin (triacetyl cellulose), a polyolefin, and an alicyclic polyolefin.

(Use of article)

The development of use of the article having a fine relief structure on the surface according to an embodiment of the invention as an optical article such as an antireflective article (antireflective film, antireflective membrane or the like), an optical waveguide, a relief hologram, a lens, a polarization-separation element, and a cell culture sheet can be expected, and the article is particularly suitable for use as an antireflective article. The article having a fine relief structure on the surface according to an embodiment of the invention may be a light transmissive article.

Examples of the antireflective article may include an antireflective membrane, an antireflective film, and an antireflective sheet which are provided on the surface of an image display device (a liquid crystal display device, a plasma display panel, an electroluminescence display, a cathode ray tube display device, or the like), a lens, a show window, an eye glass, and the like. In the case of being used in an image display device, the antireflective film may be directly pasted on the image display surface, the antireflective membrane may be directly formed on the surface of a member constituting the image display surface, or the antireflective membrane may be formed on the front plate.

As described above, in the article according to the first embodiment of the invention, a specific active energy ray-curable resin composition is used and thus a change in optical performance of the article due to bleeding out is suppressed and favorable optical performance can be maintained.

In the article according to the second embodiment of the invention, a fine relief structure is formed using an active energy ray curable resin composition containing a specific (meth)acrylate, and thus the abrasion resistance of the fine relief structure is high and wiping-off property of dirt such as fingerprints is favorable.

In the article according to the third embodiment of the invention, a specific active energy ray curable resin composition (containing an antioxidant having a polymerizable functional group), and thus the deterioration in optical performance due to bleeding out is suppressed and high durability, particularly heat resistance and wet heat durability can be realized.

Examples

Hereinafter, the invention will be described in more detail with reference to Examples.

(Evaluation on change in reflection spectrum)

A sample having a fine relief structure transferred thereon was pasted to a black acrylic plate (trade name: ACRYLITE manufactured by Mitsubishi Rayon Co., Ltd.), the resultant was then stored in an environment having room temperature of 23°C and a humidity of 50% for 7 days, and the reflection spectrum thereof was then measured. As the reflection spectrum, a 5 degree specular reflectance was measured in a range of 380 nm to 780 nm using a spectrophotometer (product name: UV-2450 manufactured by Shimadzu Corporation). After the measurement of reflection spectrum, a part of the fine relief surface was wiped with ethanol, and the reflection spectrum was then measured again to confirm a change in reflection spectrum. It was determined that there is a change in reflection spectrum in a case in which the reflection spectrum was measured at 3 points for each case and as a result the bottom (minimum value) of the reflectance in the visible light region (380 nm to 780 nm) changed by 20 nm or more on the average before and after wiping with ethanol. The boundary between the wiped part and not-wiped part can be visually confirmed when the bottom of the reflectance of the part wiped with ethanol changed by about 20 nm or more. The indicator for evaluation was as follows.

○: There is no change in reflection spectrum before and after wiping with ethanol.
× : There is a change in reflection spectrum before and after wiping with ethanol.

(Thickness of fine relief structure layer)

The thickness of the fine relief structure layer (cured resin layer) was calculated by subtracting the thickness of the light transmissive substrate from the thickness of the layered body (article) after the transfer of the fine relief structure. The thicknesses of the layered body and the light transmissive substrate were measured using the Digimatic standard outside micrometer (manufactured by Mitutoyo Corporation).

(Content of additive (E))

The content of the additive (E) was calculated from the content of the additive (E) in the active energy ray resin composition and the thickness of the layer (cured resin layer) consisting of the cured product of the active energy ray curable resin composition.

(Evaluation of abrasion resistance)

A steel wool cut (product name: Bonstar #0000 manufactured by Nippon Steel Wool Co., Ltd.) into 2 cm × 2 cm was placed on the surface of the article and reciprocated 10 times at a travel distance: 30 mm and a head speed: 100 mm/sec on the average by applying a load of 400 g (100 gf/cm$^2$ (0.98 N/cm$^2$)) and 1 kg (250 gf/cm$^2$ (2.45 N/cm$^2$)) using an abrasion testing machine (product name: HEiDON TRIBOGEAR TYPE-30S manufactured by Shinto Scientific Co., Ltd.), and the appearance of the surface of the article was evaluated. Upon the evaluation on appearance, the article was pasted to one side of a black acrylic plate (product name: ACRYLITE manufactured by Mitsubishi Rayon Co., Ltd.) having a thickness of 2.0 mm, and the resultant was held up to the fluorescent light indoors and visually evaluated. The abrasion resistance was determined according to the following criteria.

AA: Scratches are not confirmed.
A: Scratches confirmed are less than 10.
B: Scratches confirmed are 10 or more and less than 30.
C: Scratches confirmed are 30 or more.
D: Antireflection performance is lost in more than 50% of area of abraded part.

(Evaluation on fingerprint wiping-off property)

The surface of the article on which fingerprints are adhered was wiped using a wiper (product name: Elleair Prowipe manufactured by Daio Paper Corporation) impregnated with 1.0 cc (1 mL) of tap water in one direction, and the appearance of the surface of the article was evaluated. The fingerprint wiping-off property was determined according to the following criteria.

○: Fingerprints are completely removed by wiping 2 times or less.
Δ: Fingerprints are completely removed by wiping 3 times or more and 10 times or less.
×: Fingerprints remain even after wiping 10 times.

(Evaluation on appearance of curable liquid)

It was visually determined whether the appearance of the curable liquid (active energy ray curable resin composition) is transparent or not. With regard to Examples and Comparative Examples, the cured product was also transparent when the curable liquid was completely transparent. In addition, white turbidness was also confirmed in the cured product when the curable liquid was turbid.

○: It is transparent without white turbidness.
×: It is turbid.

(Endurance test)

The endurance test was performed as follows. A sample having a fine relief structure transferred thereon was pasted to a black acrylic plate (trade name: ACRYLITE manufactured by Mitsubishi Rayon Co., Ltd.), and the resultant was then stored in an environment having a temperature of 60°C and a humidity of 90% for 500 hours. The indicator for evaluation was as follows. For the projection shape maintenance, the fine relief surface shape was observed using an electron microscope, and ○ was granted in a case in which there is no coalescence of the projections and × was granted in a case in which there is coalescence of the projections. In addition, for the presence or absence of bleeding out, ○ was granted in a case in which there is no change in reflection spectrum before and after wiping with ethanol and × was granted in a case in which there is a change. As the reflection spectrum, a 5 degree specular reflectance was measured in a range of 380 nm to 780 nm using a spectrophotometer (product name: UV-2450 manufactured by Shimadzu Corporation). After the measurement of reflection spectrum, a part of the fine relief surface was wiped with ethanol, and the reflection spectrum was then measured again to confirm a change in reflection spectrum. It was determined that there is a change in reflection spectrum in a case in which the reflection spectrum was measured at 3 points for each case and the bottom (minimum value) of the reflectance in the visible light region (380 nm to 780 nm) changed by 20 nm or more on the average before and after wiping with ethanol. The boundary between the wiped part and not-wiped part can be visually confirmed when the bottom of the reflectance of the part wiped with ethanol changes by about 20 nm or more. Wiping with ethanol was conducted by reciprocating the BEMCOT (trade name: M-3II manufactured by Asahi Kasei Fibers Corporation) impregnated with about 1 mL of ethanol 5 times.

(Manufacture of stamper)

A $\phi$65-mm aluminum disk that had been subjected to the electrolytic polishing and had a purity of 99.99% by mass and a thickness of 2 mm was used as the aluminum substrate.
A 0.3 M aqueous solution of oxalic acid was adjusted to 15°C, the aluminum substrate was immersed therein, and the ON/OFF operation of the power supply of the direct current stabilizing apparatus was repeated to intermittently flow current to the aluminum substrate, whereby the aluminum substrate was anodized. The operation to apply a constant voltage of 80 V for 5 seconds every 30 seconds was repeated 60 times to form an oxide film having pores.
Subsequently, the aluminum substrate having the oxide film formed thereon was immersed in an aqueous solution prepared by mixing 6% by mass phosphoric acid with 1.8% by mass chromic acid at 70°C for 6 hours to dissolve and remove the oxide film.
The aluminum substrate obtained by dissolving and removing the oxide film was immersed in a 0.05 M aqueous solution of oxalic acid adjusted to 16°C and anodized at 80 V for 7 seconds. Subsequently, the aluminum substrate was immersed in a 5% by mass aqueous solution of phosphoric acid adjusted to 32°C for 20 minutes so as to conduct the pore size enlarging treatment to enlarge the pores of the oxide film. The anodization and the pore size enlarging treatment were alternately repeated 5 times in total for each in this manner.
The stamper (mold) thus obtained was subjected to the mold releasing treatment by immersing it in a 0.1% by mass aqueous solution of a mold releasing agent (trade name: TDP-8 manufactured by Nikko Chemicals Co., Ltd.) for 10 minutes, withdrawing it out, and air-drying for the night.

(Measurement of peel force)

The 90 degree peel test conforming to JIS Z0237 was conducted by regarding the stamper as the adherend and the cured resin and the substrate as the adhesive tape at the time of releasing the sample after curing from the stamper (mold), and the peel force at the time of releasing from the stamper was measured.

(Transfer test)

On the side where the fine relief structure was formed of the stamper, 10 $\mu$L of the active energy ray curable resin composition was dropped, coated by pressing and spreading with a triacetyl cellulose film (product name: TD80ULM manufactured by FUJIFILM Corporation) having a thickness of 80 $\mu$m, and then cured by irradiating with ultraviolet light at energy of 1000 mJ/cm$^2$ using a high pressure mercury lamp from the film side. The stamper was released from the film, thereby obtaining an article having a fine relief structure on the film surface.

For the evaluation on continuous transfer property, the transfer was repeatedly conducted using the same stamper, the peel force at the 1000-th transfer was measured, and ○ was granted when the peel force was 30 N/m or less and × was granted when the peel force exceeded 30 N/m.

(Composition of active energy ray curable resin composition)

The polymerizable component (Z), the photopolymerization initiator (D), and the additive (E) contained in the active energy ray curable resin composition used in Examples and Comparative Examples are as presented in the following Table 1A, Table 1B, and Table 1C. Incidentally, in Tables, the "PEG" means polyethylene glycol and the "EO" means ethylene oxide. Incidentally, the numerical value for the polymerizable component (Z1, Z2, or Z3) in the other Tables (Table 2A, Table 2B to Table 4B, and Table 2C) is the mass ratio (% by mass) in the entire polymerizable component (Z1, Z2, or Z3), and the numerical values for the photopolymerization initiator (D) and the additive (E) (a mold releasing agent, a polymerization inhibitor, and an antioxidant) are the mass ratios (% by mass) to the polymerizable component (Z1, Z2, or Z3).

[Table 1A]

Table 1A

| | Product name (Manufacturer) | Compound name | Content of MEHQ [ppm] | Density [g/cm$^3$] |
|---|---|---|---|---|
| Polymerizable component (ZI) | DPHA (manufactured by Nippon Kayaku Co., Ltd.) | Mixture ofdipentaerythritol hexaacrylate and dipentaerythritol pentaacrylate | 500 | - |
| | DPEA-12 (manufactured by Nippon Kayaku Co., Ltd.) | Ethylene oxide-modified product of DPHA | 500 | - |
| | A-TMM-3LM-N (manufactured by SHIN-NAKAMURA CHEMICAL CO., LTD.) | Pentaerythritol (tri)tetraacrylate | 1000 | - |
| | A-600 (manufactured by SHIN-NAKAMURA CHEMICAL CO., LTD.) | Polyethylene glycol diacrylate (PEG molecular weight: 600, amount of oxyethylene group: about 14 moles) | 100 | - |
| | ATM-35E (manufactured by SHIN-NAKAMURA CHEMICAL CO., LTD.) | Pentaerythritol EO-modified tetraacrylate (amount of oxyethylene group: about 35 moles) | 200 | - |
| | S-1800A (manufactured by SHIN-NAKAMURA CHEMICAL CO., LTD.) | Isostearyl acrylate | 100 | - |
| Photopolymerization initiator (D) | Irgacure 184 (manufactured by BASF) | (1-hydroxycyclohexyl)phenyl methanone | - | - |
| | Irgacure 819 (manufactured by BASF) | Phenylbis(2,4,6-trimethylbenzoyl)phosphine oxide | - | - |
| Additive (E) | TDP-2 (manufactured by Nikko Chemicals Co., Ltd.) | Polyoxyethylene alkyl ether phosphate (2E.O.) | - | 0.951 |
| | MEHQ | Hydroquinone monomethyl ether | - | 1.55 |

[Table 1B]

Table 1B

| | Product name (Manufacturer) | Compound name | Number of carbon atoms in alkyl group or alkenyl group | Average number of oxyethylene group per one (meth)acryloyl group | Acrylic equivalent [g/eq] | Content of MEHQ [ppm] |
|---|---|---|---|---|---|---|
| (A) | ALE-200 (manufactured by NOF CORPORATION) | Lauryl EO-modified acrylate (oxyethylene group: about 4 moles) | 12 | 4.0 | 416 | 140 |
| | M-120 (manufactured by TOAGOSEI CO., LTD.) | 2-ethylhexyl EO-modified acrylate (oxyethylene group: about 2 moles) | 8 | 2.0 | 272 | 480 |
| | C8-9EO acrylate | Octyl EO-modified acrylate (oxyethylene group: about 9 moles) | 8 | 9.0 | 681 | 250 |
| | C16-9EO acrylate | Cetyl EO-modified acrylate (oxyethylene group: about 9 moles) | 16 | 9.0 | 693 | 250 |
| (B) | (manufactured by SHIN-NAKAMURA CHEMICAL CO., LTD.) | Glycerin EO-modified triacrylate (oxyethylene group: above 20 moles) | - | 6.7 | 432 | 200 |
| | (manufactured by SHIN-NAKAMURA CHEMICAL CO., LTD.) | Pentaerythritol EO-modified tetraacrylate (oxyethylene group: about 35 moles) | - | 8.8 | 473 | 200 |
| | DPHA-12EO (manufactured by DKS Co., Ltd.) | Dipentaerythritol EO-modified hexaacrylate (oxyethylene group: about 12 moles) | | 2.0 | 185 | 500 |
| | (manufactured by SHIN-NAKAMURA CHEMICAL CO., LTD.) | Polyethylene glycol diacrylate (PEG molecular weight = 600, oxyethylene group: about 14 moles) | - | 6.8 | 374 | 100 |

(continued)

| | Product name (Manufacturer) | Compound name | Number of carbon atoms in alkyl group or alkenyl group | Average number of oxyethylene group per one (meth)acryloyl group | Acrylic equivalent [g/eq] | Content of MEHQ [ppm] |
|---|---|---|---|---|---|---|
| (C) | PET-3 (manufactured by DKS Co., Ltd.) | Pentaerythritol (tri)tetraacrylate | - | - | 94 | 1800 |
| | DPHA (manufactured by Nippon Kayaku Co., Ltd.) | Dipentaerythritol (penta)hexaacrylate | - | - | 99 | 500 |
| | LA (manufactured by NOF CORPORATION) | Lauryl acrylate | 12 | - | 240 | 200 |
| | (manufactured by SHIN-NAKAMURA CHEMICAL CO., LTD.) | Methoxy polyethylene glycol acrylate (PEG molecular weight = 400, oxyethylene group: about 9 moles) | 1 | 9.1 | 454 | 100 |
| | BYK-UV3500 (manufactured by BYK-Chemie GmbH) | Acryl group-containing polyether-modified polydimethylsiloxane | - | Unknown | Unknown | Unknown |

[Table 1C]

Table 1C

| | | Product name (Manufacturer) | Compound name | Content of MEHQ [ppm] |
|---|---|---|---|---|
| Polymerizable component (Z3) | Polymerizable component (A) | KAYARAD DPHA (manufactured by Nippon Kayaku Co., Ltd.) | Mixture of dipentaerythritol hexaacrylate and dipentaerythritol pentaacrylate | 500 |
| | | KAYARAD DPEA-12 (manufactured by Nippon Kayaku Co., Ltd.) | Methylene oxide-modified product of DPHA | 500 |
| | | NK Ester A-TMM-3LM-N (manufactured by SHIN-NAKAMURA CHEMICAL CO., LTD.) | Pentaerythritol (tri)tetraacrylate | 1000 |
| | | NK Ester A-600 (manufactured by SHIN-NAKAMURA CHEMICAL CO., LTD) | Polyethylene glycol diacrylate (PEG molecular weight = 600, oxyethylene group: about 14 moles) | 100 |
| | | NK Ester ATM-35E (manufactured by SHIN-NAKAMURA CHEMICAL CO., LTD.) | Pentaerythritol EO-modified tetraacrylate (oxyethylene goup: about 35 moles) | 200 |
| | Antioxidant (F) | Sumilizer GM (manufactured by Sumitomo Chemical Co., Ltd.) | 2-tert-butyl-6-(3-tert-butyl-2-hydroxy-5-methylbenzyl)-4-methylphenyl acrylate | - |
| | | ADEKA STAB LA-82 (manufactured by ADEKA CORPORATION) | 1,2,2,6,6-pentamethyl-4-piperidyl methacrylate | - |
| Photopolymerization initiator (D) | | (manufactured by BASF) | (1-hydroxycyclohexyl)phenyl methanone | - |
| | | Irgacure 819 (manufactured by BASF) | Phenylbis(2,4,6-trimethylbenzoyl)phosphine oxide | - |
| Additive (E) | | MEHQ | Hydroquinone monomethyl ether (polymerization inhibitor) | - |
| | | NIKKOL TDP-2 (manufactured by Nikko Chemicals Co., Ltd.) | Polyoxyethylene alkyl ether phosphate (2E.O.) (mold releasing agent) | - |
| | | Irganox 1076 (manufactured by Ciba Specialty Chemicals Inc.) | Hindered phenolic antioxidant | - |
| | | Tinuvin 292 (manufactured by BASF) | Hindered amine-based light stabilizer (antioxidant) | - |

[Example A1]

An active energy ray curable resin composition was prepared by mixing NK ester A-TMM-3LM-N (manufactured by SHIN-NAKAMURA CHEMICAL CO., LTD., product name) at 20% by mass and NK ester ATM-35E (manufactured by SHIN-NAKAMURA CHEMICAL CO., LTD., product name) at 80% by mass as the polymerizable component (Z1), Irgacure 184 (manufactured by BASF, product name) at 0.1% by mass and Irgacure 819 (manufactured by BASF, product name) at 0.5% by mass with respect to 100% by mass of the polymerizable component (Z1) as the photopolymerization initiator (D), and NIKKOL TDP-2 (manufactured by Nikko Chemicals Co., Ltd., product name) at 0.1% by mass with respect to 100% by mass of the polymerizable component (Z1) as the mold releasing agent (additive (E)). MEHQ of the polymerization inhibitor (additive (E)) was regarded to be originally contained in the polymerizable component (Z) and thus the content thereof was 0.036% by mass.

A few drops of the active energy ray curable resin composition was dropped on the surface of the stamper and coated by pressing and spreading with a triacetyl cellulose film (product name: TD80ULM manufactured by FUJIFILM Corporation) having a thickness of 80 $\mu$m, and then cured by irradiating with ultraviolet light at energy of 1000 mJ/cm$^2$ using a high pressure mercury lamp from the film side. The stamper was released from the film, thereby obtaining an article having a fine relief structure having an average interval between the convex portions of 180 nm and a height of the convex portion of 180 nm on the film surface. The evaluation results are presented in Table 2A.

[Examples A2 to A8 and Comparative Example A1]

Articles having a fine relief structure on the surface were obtained in the same manner as in Example A1 except that the kinds of constituents and composition ratio (% by mass) of the active energy ray curable resin composition and the thickness of the cured layer (fine relief structure layer) were changed to those presented in Table 2A. The evaluation results are presented in Table 2A.
[Table 2A]

Table 2A

| | | Example A1 | Example A2 | Example A3 | Example A4 | Example A5 | Example A6 | Example A7 | Example A8 | Comparative Example A1 |
|---|---|---|---|---|---|---|---|---|---|---|
| Polymerizable component (Z1) | DPHA | | | | | 50 | 24 | | | |
| | DPEA-12 | | | | | 25 | | 64 | | |
| | A-TMM-3LM-N | 20 | 20 | 20 | 20 | | | | 20 | 20 |
| | A-600 | | | | | 25 | 76 | 36 | | |
| | ATM-35E | 80 | 80 | 80 | 80 | | | | 79 | 80 |
| | S-1800A | | | | | | | | 1 | |
| Photopolymerization initiator (D) | Irgacure 184 | 0.1 | 0.1 | 0.1 | 0.1 | 1 | 0.1 | 0.5 | 0.5 | 0.1 |
| | Irgacure 819 | 0.5 | 0.5 | 0.5 | 0.5 | 0.5 | 1 | 0.5 | 0.5 | 0.5 |
| Additive (E) | TDP-2 | 0.100 | 0.100 | 0.050 | 0.010 | 0.020 | 0.020 | 0.010 | 0.000 | 0.050 |
| | MEHQ | 0.036 | 0.036 | 0.036 | 0.036 | 0.040 | 0.020 | 0.036 | 0.036 | 0.036 |
| Thickness of cured layer [mm] | | 3 | 2 | 5 | 10 | 7 | 10 | 5 | 10 | 15 |
| Content of additive (E) [mg/m$^2$] | | 4.1 | 2.7 | 4.3 | 4.6 | 4.2 | 4.0 | 2.3 | 3.6 | 12.9 |
| Content of additive (E) [mL/m$^2$] | | 3.9 | 2.6 | 3.8 | 3.4 | 3.3 | 3.4 | 1.7 | 2.3 | 11.4 |
| Change in reflection spectrum | | ○ | ○ | ○ | ○ | ○ | ○ | ○ | ○ | X |
| Abrasion resistance (0.98 N/cm$^2$) | | B | B | B | B | C | B | B | A | B |
| Fingerprints wiping-off property | | ○ | ○ | ○ | ○ | ○ | ○ | ○ | X | ○ |

In Examples A1 to A8, the content of the additive (E) was at 5 mg/m$^2$ or less or 5 $\mu$L/m$^2$ or less, thus a change in reflection spectrum was suppressed and favorable evaluation results were obtained. On the other hand, in Comparative Example A1, the amount of the additive (E) added was too great and thereby the reflection spectrum before and after wiping the article with ethanol changed.

[Example B1]

An active energy ray curable resin composition was prepared by mixing BLEMMER ALE-200 (manufactured by NOF CORPORATION, product name) at 0.3% by mass, NK ester A-GLY-20E (manufactured by SHIN-NAKAMURA CHEMICAL CO., LTD., product name) at 84.7% by mass, and New Frontier PET-3 (manufactured by DKS Co., Ltd., product name) at 15% by mass as the polymerizable component (Z2), IRGACURE184 (manufactured by BASF, product name) at 1.0% by mass and IRGACURE819 (manufactured by BASF, product name) at 0.5% by mass as the photopolymerization initiator (D), and NIKKOL TDP-2 (manufactured by Nikko Chemicals Co., Ltd., product name) at 0.01% by mass as the mold releasing agent.

A few drops of the active energy ray curable resin composition was dropped on the surface of the stamper and coated by pressing and spreading with a triacetyl cellulose film (product name: TD80ULM manufactured by FUJIFILM Corporation) having a thickness of 80 $\mu$m, and then cured by irradiating with ultraviolet light at energy of 1000 mJ/cm$^2$ using a high pressure mercury lamp from the film side. The stamper was released from the film, thereby obtaining an article having a fine relief structure having an average interval between the convex portions of 180 nm and a height of the convex portion of 180 nm on the film surface. The evaluation results are presented in Table 2B.

[Examples B2 to B11, Comparative Examples B1 to B7, and Reference Examples B1 to B3]

Articles having a fine relief structure on the surface were obtained in the same manner as in Example 1 except that the polymerizable component (Z) of the active energy ray curable resin composition was changed to those presented in Table 2B, Table 3B, and Table 4B. The evaluation results are presented in Table 2B, Table 3B, and Table 4B. The numerical values according to the polymerizable components (A), (B), and (C) in Table 2B, Table 3B, and Table 4B denote the content (% by mass) of the respective components in the polymerizable component (Z2).

[Table 2B]

Table 2B

| | | | Example B1 | Example B2 | Example B3 | Example B4 | Example B5 | Example B6 | Example B7 | Example B8 | Example B9 | Example B10 |
|---|---|---|---|---|---|---|---|---|---|---|---|---|
| (Z2) | (A) | ALE-200 | 0.3 | 0.7 | 1 | 2 | | 1 | 1 | 1 | | |
| | | M-120 | | | | | 1 | | | | | |
| | | C8-9EO acrylate | | | | | | | | | 2 | |
| | | C16-9EO acrylate | | | | | | | | | | 2 |
| | (B) | A-GLY-20E | 84.7 | 84.3 | 84 | 83 | 84 | | | | 83 | 83 |
| | | ATM-35E | | | | | | 84 | | | | |
| | | DPHA- 12EO | | | | | | | 40 | | | |
| | | A-600 | | | | | | | 59 | 79 | | |
| | (C) | PET-3 | 15 | 15 | 15 | 15 | 15 | 15 | | | 15 | 15 |
| | | DPHA | | | | | | | | 20 | | |
| | | LA | | | | | | | | | | |
| | | AM-90G | | | | | | | | | | |
| | | BYK-UV3500 | | | | | | | | | | |
| (D) | | Irugacure 184 | 1 | 1 | 1 | 1 | 1 | 1 | 1 | 1 | 1 | 1 |
| | | Irugacure 819 | 0.5 | 0.5 | 0.5 | 0.5 | 0.5 | 0.5 | 0.5 | 0.5 | 0.5 | 0.5 |
| Mold releasing agent NIKKOL TDP-2 | | | 0.01 | 0.01 | 0.01 | 0.01 | 0.01 | 0.01 | 0.01 | 0.01 | 0.01 | 0.01 |
| Polymerization inhibitor MEHQ | | | 0.044 | 0.044 | 0.044 | 0.044 | 0.044 | 0.044 | 0.026 | 0.018 | 0.044 | 0044 |
| Film thickness [mm] | | | 5 | 5 | 5 | 5 | 5 | 5 | 5 | 5 | 5 | 5 |
| Content of additive (E) [mg/m$^2$] | | | 2.7 | 2.7 | 2.7 | 2.7 | 2.7 | 2.7 | 1.8 | 1.4 | 2.7 | 2.7 |
| Acrylic equivalent [g/eq] | | | 281 | 281 | 281 | 281 | 280 | 295 | 266 | 241 | 282 | 282 |
| Abrasion resistance (0.98 N/m$^3$) | | | A | A | AA | AA | A | AA | A | A | AA | AA |
| Fingerprint wiping-off property | | | ○ | ○ | ○ | Δ | Δ | ○ | ○ | ○ | ○ | Δ |

34

(continued)

| | Example B1 | Example B2 | Example B3 | Example B4 | Example B5 | Example B6 | Example B7 | Example B8 | Example B9 | Example B10 |
|---|---|---|---|---|---|---|---|---|---|---|
| Appearance of curable liquid | ○ | ○ | ○ | ○ | ○ | ○ | ○ | ○ | ○ | ○ |

[Table 3B]

Table3B

| (Z2) | | | Comparative Examples B1 | Comparative Example B2 | Comparative Example B3 | Comparative Example B4 | Comparative Example B5 | Comparative Example B6 | Comparative Example B7 |
|---|---|---|---|---|---|---|---|---|---|
| | (A) | ALE-200 | | | | | | | |
| | | M-120 | | | | | | | |
| | | C8-9EO acrylate | | | | | | | |
| | | C16-9EO acrylate | | | | | | | |
| | (B) | A-GLY-20E | 85 | 84.5 | 84 | 84 | 83 | 84.5 | 84 |
| | | ATM-35E | | | | | | | |
| | | DPHA-12EO | | | | | | | |
| | | A-600 | | | | | | | |
| | (C) | PET-3 | 15 | 15 | 15 | 15 | 15 | 15 | 15 |
| | | DPHA | | | | | | | |
| | | LA | | 0.5 | 1 | | | | |
| | | AM-90G | | | | 1 | 2 | | |
| | | BYK-UV3500 | | | | | | 0.5 | 1 |
| (D) | | Irugacure 184 | 1 | 1 | 1 | 1 | 1 | 1 | 1 |
| | | Irugacure819 | 0.5 | 0.5 | 0.5 | 0.5 | 0.5 | 0.5 | 0.5 |
| Mold releasing agent TDP-2 | | | 0.01 | 0.01 | 0.01 | 0.01 | 0.01 | 0.01 | 0.01 |
| Polymerization inhibitor MEHQ | | | 0.044 | 0.044 | 0.044 | 0.044 | 0.044 | ≥0.044 | ≥0.044 |
| Film thickness [mm] | | | 5 | 5 | 5 | 5 | 5 | 5 | 5 |
| Content of additive (E) [mg/m$^2$] | | | 2.7 | 2.7 | 2.7 | 2.7 | 2.7 | ≥ 2.7 | ≥ 2.7 |
| Acrylic equivalent [g/eq] | | | 281 | 280 | 279 | 281 | 281 | Unknown | Unknown |
| Abrasion resistance (0.98 N/cm$^2$) | | | B | B | A | B | B | A | AA |
| Fingerprint wiping-off property | | | ○ | X | X | ○ | ○ | X | X |

37

| | | Comparative Examples B1 | Comparative Example B2 | Comparative Example B3 | Comparative Example B4 | Comparative Example B5 | Comparative Example B6 | Comparative Example B7 |
|---|---|---|---|---|---|---|---|---|
| Appearance of curable liquid | | ○ | ○ | ○ | ○ | ○ | X | X |

[Table 4B]

Table 4B

| | | | Example B11 | Reference Example B1 | Reference Example B2 | Reference Example B3 |
|---|---|---|---|---|---|---|
| (Z2) | (A) | ALE-200 | 1 | | | |
| | | M-120 | | | | |
| | | C8-9EO acrylate | | | | |
| | | C16- 9EO acrylate | | | | |
| | (B) | A-GLY-20E | | | | |
| | | ATM-35E | 79 | 80 | 80 | 80 |
| | | DPHA-12EO | | | | |
| | | A-600 | | | | |
| | (C) | PET-3 | 20 | 20 | 20 | 20 |
| | | DPHA | | | | |
| | | LA | | | | |
| | | AM-90G | | | | |
| | | BYK-UV3500 | | | | |
| Photopolymerization initiator (D) | | Irgacure 184 | 1 | 1 | 1 | I |
| | | Irgacure 819 | 0.5 | 0.5 | 0.5 | 0.5 |
| Mold releasing agent TDP-2 | | | 0 | 0.01 | 0.1 | 0 |
| Polymerization inhibitor MEHQ | | | 0.052 | 0.052 | 0.052 | 0.052 |
| Film thickness [mm] | | | 5 | 5 | 5 | 5 |
| Content of additive (E) [mg/m$^2$] | | | 2.6 | 3.1 | 7.6 | 2.6 |
| 90 degree peel force at 1000-th transfer [N/m] | | | 26.2 | 14.2 | 4.7 | 49.3 |
| Continuous transfer property (threshold = 30 [N/m]) | | | ○ | ○ | ○ | X |

In Examples B1 to B10, the active energy ray curable resin compositions containing the (meth)acrylate (A) were used and thus the cured product thereof exhibited favorable resistance to steel wool abrasion. The test results for resistance to steel wool abrasion was 100 gf/cm$^2$ (0.98 N/cm$^2$) to be AA (no scratches) and fingerprint wiping-off property was also favorable particularly in Examples B3, B4, B6, B9, and B10.

In Comparative Example B1, the active energy ray curable resin composition did not contain the (meth)acrylate (A) and steel wool scratch resistance of the cured product thereof was poor as a result.

In Comparative Examples B2 and B3, a polymerizable component containing lauryl acrylate that was not EO-modified was used. As a result, fingerprint wiping-off property of the cured product was impaired.

In Comparative Examples B4 and B5, a polymerizable component containing a methoxy polyethylene glycol acrylate was used. As a result, slip property was not able to be imparted to the composition since the alkyl group was a methyl group and thus abrasion resistance of the cured product thereof was poor.

In Comparative Examples B6 and B7, a polymerizable component containing an acrylate having a silicone backbone was used. As a result, the curable liquid was turbid and the cured product thereof was also turbid although the cured product had abrasion resistance. In addition, fingerprint wiping-off property also significantly decreased.

As presented in Table 4B, in Reference Example B1 and Reference Example B2, the composition contained a mold releasing agent and thus the continuous transfer property was excellent, but in Reference Example B3, the composition did not contain a mold releasing agent and thus the continuous transfer property was poor. On the other hand, it was confirmed that the composition of Example B11 was able to exhibit excellent mold releasing property by the effect of ALE-200 that was the (meth)acrylate (A) containing a (meth)acryloyl group even though a mold releasing agent was not contained therein.

[Example C1]

An active energy ray curable resin composition was prepared by mixing NK ester A-TMM-3LM-N (manufactured by SHIN-NAKAMURA CHEMICAL CO., LTD., product name) at 20% by mass and NK ester ATM-35E (manufactured by SHIN-NAKAMURA CHEMICAL CO., LTD., product name) at 79% by mass as the polymerizable component (A) of the polymerizable component (Z3), ADEKA STAB LA-82 (manufactured by ADEKA CORPORATION, product name) at 1% by mass as the antioxidant (F), Irgacure 184 (manufactured by BASF, product name) at 0.1% by mass and Irgacure 819 (manufactured by BASF, product name) at 0.5% by mass as the photopolymerization initiator (D), and NIKKOL TDP-2 (manufactured by Nikko Chemicals Co., Ltd., product name) at 0.1% by mass as the mold releasing agent (additive (E)). MEHQ of the polymerization inhibitor (additive (E)) was regarded to be originally contained in the polymerizable component (Z) and thus the content thereof was 0.036% by mass.

A few drops of the active energy ray curable resin composition was dropped on the surface of the stamper and coated by pressing and spreading with a triacetyl cellulose film (product name: TD80ULM manufactured by FUJIFILM Corporation) having a thickness of 80 $\mu$m, and then cured by irradiating with ultraviolet light at energy of 1000 mJ/cm$^2$ using a high pressure mercury lamp from the film side. The stamper was released from the film, thereby obtaining an article having a fine relief structure having an average interval between the convex portions of 180 nm and a height of the convex portion of 180 nm on the surface thereof. The evaluation results are presented in Table 2C.

[Examples C2 to C4 and Comparative Examples C1 to C4]

Articles having a fine relief structure on the surface were obtained in the same manner as in Example C1 except that the composition ratio (% by mass) and kinds of constituents of the active energy ray curable resin composition were changed to those presented in Table 2C. The evaluation results are presented in Table 2C.

[Table 2C]

Table 2C

| | | | Example 1 | Example 2 | Example 3 | Example 4 | Comparative Example 1 | Comparative Example 2 | Comparative Example 3 | Comparative Example 4 |
|---|---|---|---|---|---|---|---|---|---|---|
| Polymerizable component (Z3) | Polymerizable component (A) | KAYARAD DPHA | | | 24 | | | 24 | | |
| | | KAYARAD DPEA-12 | | | | 64 | | | | |
| | | NK Ester A-TMM-3LM-N | 20 | 20 | | | 20 | | 20 | 20 |
| | | NK Ester A-600 | | | 76 | 36 | | 76 | | |
| | | NK Ester ATM-35E | 79 | 79 | | | 80 | | 80 | 80 |
| | Antioxidant (F) | Sumilizer GM | 1 | | | | | | | |
| | | ADEKA STAB LA-82 | | 1 | 1 | 1 | | | | |
| Photopolymerization initiator (D) | | Irgacure 184 | 1 | 1 | 1 | 1 | 1 | 1 | 1 | 1 |
| | | Irgacure 819 | 0.5 | 0.5 | 0.5 | 0.5 | 0.5 | 0.5 | 0.5 | 0.5 |
| Additive (E) | | NIKKOL TDP-2 | 0.01 | 0.01 | 0.01 | 0.01 | 0.01 | 0.01 | 0.01 | 0.01 |
| | | Irganox 1076 | | | | | | | 1 | |
| | | Tinuvin 292 | | | | | | | | 1 |
| | | MEHQ | 0.036 | 0.036 | 0.020 | 0.036 | 0.036 | 0.020 | 0.036 | 0036 |
| Film thickness [mm] | | | 10 | 10 | 10 | 10 | 10 | 10 | 10 | 10 |
| Content of addrive (E) [mg/m$^2$] | | | 4.6 | 4.6 | 3.0 | 4.6 | 4.6 | 3.0 | 104.6 | 104.6 |
| Wet heat endurance test (60°C, 90%, 500 hours) | Projection shape maintenance | | ○ | ○ | ○ | ○ | X | X | ○ | ○ |
| | Presence or absence of bleeding out | | ○ | ○ | ○ | ○ | ○ | ○ | X | X |
| Abrasion resistance (0.98 N/m$^2$) | | | B | B | B | B | B | B | B | B |
| Fingerprint wiping-off property | | | ○ | ○ | ○ | ○ | ○ | ○ | ○ | ○ |

EP 2 979 854 A1

In Examples C1 to C4, the antioxidant (F) was contained and thus it was able to maintain the projection shape after the wet heat endurance test, and the amount of the additive (E) added was 5 [mg/m$^2$] or less and thus it was able to suppress a change in optical performance due to bleeding out after the wet heat endurance test. On the other hand, in Comparative Examples C1 and C2, the antioxidant (F) was not contained and thus it was not able to maintain the projection shape. In Comparative Examples C3 and C4, it was not able to suppress a change in optical performance due to bleeding out although it was able to maintain the projection shape.

INDUSTRIAL APPLICABILITY

Since the article according to an embodiment of the invention is able to maintain excellent optical performance, the article is usable in various kinds of displays of a television, a cellular phone, a portable game console and the like, and thus is significantly industrially useful.

EXPLANATIONS OF LETTERS OR NUMERALS

10   Aluminum substrate
12   Pore (inverted structure of fine relief structure)
14   Oxide film
16   Pore generating point
18   Stamper
20   Roll-shaped stamper
22   Tank
24   Pneumatic cylinder
26   Nip roll
28   Active energy ray irradiating device
30   Peeling roll
40   Article
42   Substrate
44   Cured resin layer
46   Convex portion

**Claims**

1. An article comprising a fine relief structure layer including a cured product of an active energy ray curable resin composition on at least one surface of a substrate, wherein
the active energy ray curable resin composition contains a polymerizable component (Z1), a photopolymerization initiator (D), and an additive (E), and
the additive (E) is a non-polymerizable and a content of the additive (E) in the fine relief structure layer is 5 mg/m$^2$ or less.

2. The article according to claim 1, wherein a mass average molecular weight of the additive (E) is in a range of 100 to 2000.

3. The article according to claim 1 or 2, wherein a change in reflection spectrum of the minimum value of a reflectance of a surface of the fine relief structure layer in a visible light region before and after the surface is wiped with ethanol is less than 20 nm.

4. The article according to any one of claims 1 to 3, wherein the additive (E) includes at least one kind selected from the group consisting of an antioxidant, a polymerization inhibitor, an ultraviolet absorber, a light stabilizer, a defoaming agent, a mold releasing agent, a lubricant, a leveling agent, a surfactant, a coloring agent, a fluorescent agent, a luminescent agent, and an antistatic agent.

5. The article according to claim 4, wherein the additive (E) includes at least one of a polymerization inhibitor and a mold releasing agent.

6. The article according to claim 4 or 5, wherein the polymerization inhibitor includes at least one of a hydroquinone-based polymerization inhibitor and a phenolic polymerization inhibitor.

7. The article according to any one of claims 4 to 6, wherein the mold releasing agent contains a (poly)oxyalkylene alkyl phosphate compound.

8. The article according to any one of claims 1 to 7, wherein the polymerizable component (Z1) contains a (meth)acrylate (A) having a straight or branched chain alkyl or alkenyl group having 6 to 22 carbon atoms, an oxyalkylene group having 2 to 4 carbon atoms, and a (meth)acryloyl group.

9. The article according to any one of claims 1 to 8, wherein the polymerizable component (Z1) contains an antioxidant (F) having a polymerizable functional group.

10. An article comprising a fine relief structure layer including a cured product of an active energy ray curable resin composition on at least one surface of a substrate, wherein
the active energy ray curable resin composition contains a polymerizable component (Z2) containing a (meth)acrylate (A) having a straight or branched chain alkyl or alkenyl group having 6 to 22 carbon atoms, an oxyalkylene group having 2 to 4 carbon atoms, and a (meth)acryloyl group, and a photopolymerization initiator (D).

11. The article according to claim 10, wherein the (meth)acrylate (A) has a structure wherein the alkyl group or alkenyl group and the oxyalkylene group are bonded to each other.

12. The article according to claim 10 or 11, wherein a content of the (meth)acrylate (A) in the polymerizable component (Z2) is in a range of 0.1 to 10% by mass.

13. An article comprising a fine relief structure layer including a cured product of an active energy ray curable resin composition on at least one surface of a substrate, wherein
the active energy ray curable resin composition contains a polymerizable component (Z3) and a photopolymerization initiator (D), and
the polymerizable component (Z3) contains an antioxidant (F) having a polymerizable functional group.

14. The article according to claim 9 or 13, wherein the antioxidant (F) has a (meth)acryloyl group as the polymerizable functional group.

15. The article according to claim 9, 13 or 14, wherein the antioxidant (F) has radical scavenging ability.

16. The article according to any one of claims 9 and 13 to 15, wherein the antioxidant (F) includes at least one of a phenolic antioxidant and a hindered amine-based antioxidant.

17. The article according to any one of claims 9 and 13 to 16, wherein the antioxidant (F) is a compound having a (meth)acryloyl group in the same molecule, and
the compound is a hindered amine compound or a compound having a hydroxyl group in an aromatic ring as a substituent.

18. The article according to any one of claims 13 to 17, comprising a non-polymerizable compound that is not copolymerized with the polymerizable component (Z3) as an additive (E).

19. The article according to any one of claims 1 to 17, wherein the polymerizable component contains an oxyethylene group at 30 to 70% by mass with respect to the entire polymerizable component.

20. The article according to any one of claims 1 to 19, wherein the polymerizable component contains a (meth)acrylate (B) having an oxyethylene group and two or more (meth)acryloyl groups.

21. The article according to any one of claims 1 to 20, wherein the polymerizable component contains pentaerythritol (meth)acrylate or dipentaerythritol (meth)acrylate having two or more (meth)acryloyl groups.

22. The article according to any one of claims 1 to 21, wherein a thickness of the fine relief structure layer is in a range of 1 to 50 $\mu$m.

**23.** The article according to any one of claims 1 to 22, wherein an average interval between adjacent convex portions of the fine relief structure layer is equal to or less than a wavelength of visible light.

**24.** An antireflective article comprising the article according to any one of claims 1 to 23.

FIG. 1

FIG. 2

FIG. 3

## INTERNATIONAL SEARCH REPORT

| International application No. |
| --- |
| PCT/JP2014/059450 |

A.  CLASSIFICATION OF SUBJECT MATTER
*B32B3/30*(2006.01)i, *B32B27/16*(2006.01)i, *B32B27/30*(2006.01)i, *C08F290/06*(2006.01)i, *G02B1/11*(2006.01)n

According to International Patent Classification (IPC) or to both national classification and IPC

B.  FIELDS SEARCHED

Minimum documentation searched (classification system followed by classification symbols)
B32B3/30, B32B27/16, B32B27/30, C08F290/06, G02B1/11

Documentation searched other than minimum documentation to the extent that such documents are included in the fields searched
Jitsuyo Shinan Koho          1922-1996    Jitsuyo Shinan Toroku Koho    1996-2014
Kokai Jitsuyo Shinan Koho    1971-2014    Toroku Jitsuyo Shinan Koho    1994-2014

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2011-256307 A  (Mitsubishi Rayon Co., Ltd.), 22 December 2011 (22.12.2011), | 1-8,10-12, 19-22,24 |
| Y | claims; paragraphs [0003], [0012] to [0015], [0020], [0021], [0023], [0028] (Family: none) | 9,13-18,23 |
| X | JP 2011-246517 A  (Mitsubishi Rayon Co., Ltd.), 08 December 2011 (08.12.2011), | 1-8,10-12, 19-22,24 |
| Y | claims 1, 4; paragraphs [0013], [0021], [0022], [0029], [0034], [0036] (Family: none) | 9,13-18,23 |
| Y | WO 2011/049186 A1  (Teijin Chemicals Ltd.), 28 April 2011 (28.04.2011), page 30, lines 13 to 18; page 84, line 8 to page 85, line 5 & US 2012/0225241 A1     & EP 2492081 A1 | 9,13-18 |

☒  Further documents are listed in the continuation of Box C.      ☐  See patent family annex.

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search      27 June, 2014 (27.06.14) | Date of mailing of the international search report      08 July, 2014 (08.07.14) |
| --- | --- |
| Name and mailing address of the ISA/      Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2014/059450 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2010-77367 A  (Fujifilm Corp.), 08 April 2010 (08.04.2010), claim 1; paragraphs [0172], [0192] & US 2010/0080926 A1    & EP 2169022 A1 | 9,13-18 |
| Y | JP 2000-71290 A  (Teijin Ltd.), 07 March 2000 (07.03.2000), claims; paragraphs [0006], [0007] (Family: none) | 23 |
| A | JP 2008-88299 A  (Mitsubishi Rayon Co., Ltd.), 17 April 2008 (17.04.2008), claims; paragraphs [0002], [0013], [0018], [0029]; table 1 (Family: none) | 1-24 |
| A | JP 2007-84625 A  (Hitachi Chemical Co., Ltd.), 05 April 2007 (05.04.2007), claims; paragraphs [0019], [0022], [0024] & US 2007/0065757 A1 | 1-24 |
| A | JP 4689718 B2  (Mitsubishi Rayon Co., Ltd.), 25 May 2011 (25.05.2011), claims; paragraphs [0047], [0048] (Family: none) | 1-24 |
| A | JP 5042386 B2  (DNP Fine Chemicals Co., Ltd.), 03 October 2012 (03.10.2012), claims; paragraphs [0023], [0048] & US 2009/0246494 A1    & WO 2007/040159 A1 | 1-24 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4156415 B
- JP 2000071290 A
- JP 2007084625 A
- JP 5042386 B
- JP 4689718 B